# EUROPEAN PATENT SPECIFICATION

(11) **EP 4 282 889 B1**
(45) Date of publication and mention of the grant of the patent: **20.08.2025**
(21) Application number: 22775343.1
(22) Date of filing: 16.03.2022
(51) Int. Cl.: C08F 257/00, C08F 265/00, C08L 53/00, C08J 5/18

(54) **(METH)ACRYLIC BLOCK COPOLYMER, (METH)ACRYLIC BLOCK COPOLYMER LATEX, (METH)ACRYLIC BLOCK COPOLYMER LATEX COMPOSITION, AND SHAPED OBJECT**
(METH)ACRYLBLOCKCOPOLYMER, (METH)ACRYLBLOCKCOPOLYMERLATEX, (METH)ACRYLBLOCKCOPOLYMERLATEXZUSAMMENSETZUNG UND FORMKÖRPER
COPOLYMÈRE SÉQUENCÉ (MÉTH)ACRYLIQUE, LATEX DE COPOLYMÈRE SÉQUENCÉ (MÉTH)ACRYLIQUE, COMPOSITION DE LATEX DE COPOLYMÈRE SÉQUENCÉ (MÉTH)ACRYLIQUE ET OBJET FAÇONNÉ

(30) Priority: 23.03.2021 JP 2021049145
(43) Date of publication of application: 29.11.2023
(73) Proprietor: Denka Company Limited, Tokyo 103-8338 (JP)
(72) Inventor: NISHINO, Wataru, Tokyo 103-8338 (JP); KUMAGAI, Yushi, Tokyo 103-8338 (JP); SHIMOTOMAI, Ibuki, Tokyo 103-8338 (JP); SAITO, Yutaka, Tokyo 103-8338 (JP)
(74) Representative: Gulde & Partner
(86) International application number: PCT/JP2022/011968
(87) International publication number: WO 2022/202555

(56) References cited:
- WO-A1-2017/073287
- WO-A1-2020/145206
- JP-A- 2003 155 463
- JP-A- 2020 037 635
- JP-A- H 039 914
- US-A1- 2009 221 756

## Description

### TECHNICAL FIELD

The present invention relates to a (meth)acrylate-based block copolymer, a (meth)acrylate-based block copolymer latex, a (meth)acrylate-based block copolymer latex composition, and molded body.

### BACKGROUND ART

Natural rubber (NR) gloves, isoprene rubber (IR) gloves, (CR) gloves and the like are widely used as surgical gloves. NR gloves and IR gloves have low modulus and excellent texture, but NR gloves have a problem of type I allergy caused by latex proteins. IR gloves have a problem of type IV allergy caused by a vulcanization accelerator such as di-tolylguanidine (DOTG). An allergy-free alternative material is therefore desired. CR gloves do not contain latex protein or DOTG, but due to the effects of a vulcanization accelerator such as zinc dibutyldithiocarbamate (ZDBC), which did not react during vulcanization and remains, they have problems of increased modulus and deterioration of texture after product storage.

In addition, in order to obtain the desired mechanical strength, the chloroprene-based rubber composition have to contain a vulcanizing agent such as sulfur, zinc oxide, and magnesium oxide, and a vulcanization accelerator such as a thiuram-based, dithiocarbamate-based, thiourea-based, guanidine-based, xanthate-based, and thiazole-based accelerator. Since the vulcanization accelerator is a causative agent of type IV allergy that causes skin diseases such as dermatitis, the reduction or non-use of the vulcanization accelerator is an important theme. In addition, eliminating the use of the vulcanization accelerator not only reduces allergies but also reduces costs. Thus, there is a demand for a rubber composition that exhibits sufficient mechanical strength without using the vulcanization accelerators.

As a technology relating to a (meth)acrylate-based block copolymer, Patent Literature 1 discloses an invention relating to a star-shaped copolymer based on an aromatic vinyl block and/or methacrylic block, and an acrylic block. Patent Literature 2 discloses a copolymer comprising a styrene block and a ethyl acrylate or ethyl methacrylate block. Patent Literature 3 describes an A-B-A type triblock copolymer having a polymer block A constituting a hard segment having a glass transition temperature of 80 to 150 ° C and a polymer block B constituting a soft segment having a glass transition temperature of 25 ° C or lower. Patent Literature 4 relates to an emulsion-type pressure-sensitive adhesive comprising a block copolymer containing a polymer block mainly composed of a styrene-based monomer and a polymer block mainly composed of at least one monomer selected from the group consisting of an acrylic acid ester, butadiene, isoprene, vinyl acetate, and acrylic acid, the block copolymer being obtained by aqueous polymerization in the presence of a compound having a thiocarbonylthio group. Patent Literature 5 relates to a block copolymer and a method for producing the same, and more particularly to a block copolymer which is useful as an elastomer having excellent heat resistance, oil resistance and moldability. Patent Literature 6 discloses an ABA type block copolymer having both ends constituted by a polymer structural unit (M2), and an intermediate portion between the polymer structural unit (M2) at one end and the polymer structural unit (M2) at the other end is constituted by a block made of a polymer structural unit, and is classified as a so-called ABA type block copolymer.

### CITATION LIST

### PATENT LITERATURE

Patent Literature 1 JPHei-5-500827 A
Patent Literature 2 US 2009/221756 A1
Patent Literature 3 WO 2020/145206 A1
Patent Literature 4 JP 2003 155463 A
Patent Literature 5 WO 2017/073287 A1
Patent Literature 6 JP H03 9914 A

### SUMMARY OF INVENTION

### TECHNICAL PROBLEM

As described above, there is a demand for a latex which is allergy-free and which can become a molded body having low modulus and high tensile strength, even if the amount of the vulcanizing agent and the vulcanization accelerator used is reduced, or even if the vulcanizing agent and the vulcanization accelerator are not used. However, it was not possible to obtain molded body with low modulus and high tensile strength from a latex containing a conventional (meth)acrylate-based block copolymer without using the vulcanizing agent and vulcanization accelerator.

Therefore, an object of the present invention is to provide a (meth)acrylate-based block copolymer, a (meth)acrylate-based block copolymer latex, a (meth)acrylate-based block copolymer latex composition, and a (meth)acrylate-based block copolymer latex composition, which provide an immersion molded film with excellent flexibility, tensile properties, and heat aging resistance even if the amount of vulcanizing agent or vulcanization accelerator used is reduced or not used, and a molded body with excellent flexibility, tensile properties, and heat aging resistance even if the amount of vulcanizing agent or vulcanization accelerator used is reduced or they are not used.

### SOLUTION TO PROBLEM

According to the present invention, a (meth)acrylate-based block copolymer comprising a polymer block (A) and a (meth)acrylate-based polymer block (B), wherein:
the (meth)acrylate-based block copolymer contains 5 to 30% by mass of the polymeric block (A) and 70 to 95% by mass of the (meth)acrylate-based polymer block (B) with respect to 100% by mass of the (meth)acrylate-based block copolymer;
the polymer block (A) has a monomer unit derived from a monomer;
when the monomer is polymerized alone, a polymer with a glass transition temperature of 80 °C or higher can be obtained;
the polymer block (A) consists of at least one monomer unit selected of the group of an aromatic vinyl monomer unit, a methyl methacrylate monomer unit, an acrylonitrile monomer unit or a mixture thereof and
the polymer block (B) has a (meth)acrylate-based monomer unit and a polyfunctional monomer unit,
is provided.

The inventor has made intensive studies, and found that, in a (meth)acrylate-based block copolymer containing a polymer block (A) and a (meth)acrylate-based polymer block (B), by specifing the type of the polymer block (A) and the blended amount of the polymer block (A) and the polymer block (B) to adjust so that a tensile strength of a film obtained by immersion-molding a (meth)acrylate-based block copolymer latex containing the (meth)acrylate-based block copolymer is equal to or greater than a certain value, the (meth)acrylate-based block copolymer, which can provide an immersion molded film with excellent flexibility, tensile properties, and heat aging resistance even if the amount of the vulcanizing agent or vulcanization accelerator used is reduced or not used, can be obtained and completing the present invention.

Preferably, the polymer block (A) contains at least one monomer unit from the group consisting of an aromatic vinyl monomer unit, a methyl methacrylate monomer unit, and an acrylonitrile monomer unit.

Preferably, a number average molecular weight of the polymer block (A) is 10,000 or more.

Preferably, the (meth)acrylate-based polymer block (B) contains 0.05 to 10% by mass of a polyfunctional monomer unit with respect to 100% by mass of the (meth)acrylate-based polymer block (B).

Preferably, the polyfunctional monomer includes a monomer represented by formula (1) or an aromatic polyene monomer; 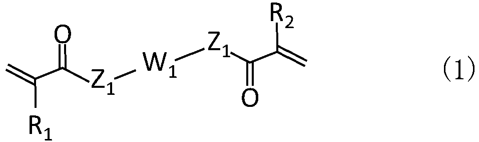
in the formula (1), each of R₁ and R₂ represents any one of hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group;
W₁ represents any one of a saturated or unsaturated hydrocarbon group, a saturated or unsaturated cyclic hydrocarbon group, a saturated or unsaturated hydrocarbon group containing a hetero atom, and a saturated or unsaturated cyclic hydrocarbon group containing a hetero atom;
Z₁ represents any one of oxygen, sulfur, and a structure represented by -NR₀⁻; and
R₀ represents any one of hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

According to another aspect of the present invention, a (meth)acrylate-based block copolymer latex containing the (meth)acrylate-based block copolymer described above is provided.

Preferably, the (meth)acrylate-based block copolymer latex contains 20 to 100% by mass of toluene insoluble content with respect to 100% by mass of the (meth)acrylate-based block copolymer latex.

Preferably, an average particle size for the (meth)acrylate-based block copolymer latex by measured by dynamic light scattering method is 300 nm or less.

Preferably, the (meth)acrylate-based block copolymer latex is for immersion molded body.

According to another aspect of the present invention, a (meth)acrylate-based block copolymer latex composition containing the (meth)acrylate-based block copolymer latex described above, is provided.

Preferably, a total content of vulcanizing agent and vulcanization accelerator is 5% by mass percent or less with respect to 100% by mass of the (meth)acrylate-based block copolymer latex contained in the (meth)acrylate-based block copolymer latex composition.

According to another aspect of the present invention, a molded body containing a (meth)acrylate-based block copolymer latex composition described above is provided.

### DESCRIPTION OF EMBODIMENTS

Hereinafter, the present invention will be described in detail by exemplifying embodiments of the present invention. The present invention is not limited in any way by these descriptions. Each feature of the embodiments of the invention described below can be combined with each other. In addition, the invention is established independently for each feature. In the present specification and claims, the description "A to B" means A or more and B or less.

### 1. (Meth)acrylate-based Block Copolymer

The (meth)acrylate-based block copolymer according to the present invention is a copolymer comprising a polymer block (A) derived from a monomer, which gives a polymer having a glass transition temperature of 80°C or higher when homopolymerized, and a (meth)acrylate-based polymer block (B) including (meth)acrylate-based monomer.

The (meth)acrylate-based block copolymer include those having a structure in which block copolymers are chemically bonded to each other.

### 1.1 Polymer Block (A)

The polymer block (A) is a polymer block derived from a monomer, which gives a polymer having a glass transition temperature of 80°C or higher when homopolymerized. By using such a monomer, the tensile strength at break of the obtained (meth)acrylate-based block copolymer is improved. It is preferable to use a monomer that gives a polymer having a glass transition temperature of 85°C or higher. From the viewpoint of moldability, it is preferable that the monomer gives a polymer having a glass transition temperature of 150°C or lower, and it is more preferable that a monomer gives a polymer having a glass transition temperature of 120° C or lower. The glass transition temperature is, for example, 80, 85, 90, 95, 100, 105, 110, 120, 130, 140, 150°C, and may be in the range between the two values exemplified herein. In this specification, the glass transition temperature is an extrapolated glass transition end temperature (T eg) measured according to JIS K 7121. In the case that the polymer block (A) is a polymer block obtained by polymerizing a monomer (A), when the monomer A is homopolymerized to obtain a homopolymer (A) having a number average molecular weight of 10,000 to 30,000, the homopolymer (A) preferably has the above glass transition temperature.

The monomer unit constituting the polymer block (A) consists of at least one monomer unit selected of the group of an aromatic vinyl monomer unit, a methyl methacrylate monomer unit, and an acrylonitrile monomer unit or a mixture thereof. A unit derived from an aromatic vinyl monomer is preferably used, and a styrene unit is preferably used. The polymer block (A) can be a polymer block obtained by copolymerization of these monomers, or a polymer block comprising a monomer unit copolymerizable with these monomers, as long as the object of the present invention is not impaired.

The number average molecular weight of the polymer block (A) is preferably 10,000 or more from the viewpoint of the tensile properties and moldability of the obtained (meth)acrylate-based block copolymer. The number average molecular weight of the polymer block (A) can be, for example, 10,000, 15,000, 20,000, 25,000, 30,000, and may be in the range between the two values exemplified herein. Moreover, the molecular weight distribution of the polymer block (A) is preferably 2.0 or less from the viewpoint of moldability. The molecular weight distribution of the polymer block (A) is, for example, 1.0, 1.1, 1.2, 1.3, 1.4, 1.5, 1.6, 1.7, 1.8, 1.9, 2.0, and may be in the range between the two values exemplified herein.

In the present specification, the number average molecular weight and the weight average molecular weight are polystyrene-equivalent values measured by gel permeation chromatography (GPC), and are measured values under the measurement conditions described below.
Device: HLC-8320 (manufactured by Tosoh Corporation)
Column: 3 TSKgel GMHHR-H in series
Temperature: 40°C
Detection: differential refractometer
Solvent: tetrahydrofuran
Calibration curve: made using standard polystyrene (PS).

### 1.2 (Meth) Acrylate-based Polymer Block (B)

The (meth)acrylate-based polymer block (B) contains a (meth)acrylate-based monomer unit and is mainly composed of (meth)acrylate-based monomers. The (meth)acrylate-based polymer block (B) contains a polyfunctional monomer unit. Further, the (meth)acrylate-based polymer block (B) can be a polymer block containing a (meth)acrylate-based monomer unit, a polyfunctional monomer unit, and a unit derived from a monomer copolymerizable with these, as long as the object of the present invention is not impaired. The (meth)acrylate-based polymer block (B) preferably contains 90% by mass or more of a structural unit derived from the (meth)acrylate-based monomer, with respect to 100% by mass of the (meth)acrylate-based polymer block (B).

The content of each structural unit in the (meth)acrylate-based polymer block (B) is not particularly limited, but it is preferably 90 to 99.95% by mass of (meth)acrylate-based monomer unit and 0.05 to 10% by mass of the polyfunctional monomer unit. The content of the polyfunctional monomer unit in the (meth)acrylate-based polymer block (B) is, for example, 0.05, 0.50, 1.00, 2.00, 3.00, 4.00, 5.00, 6.00, 7.00, 8.00, 9.00, 10.00% by mass, and may be in the range between the two values exemplified herein.

### 1.2.1 (Meth)acrylate-based Monomer

Examples of the (meth)acrylate-based monomer according to one embodiment of the present invention may include, for example, methyl acrylate, methyl methacrylate, ethyl acrylate, ethyl methacrylate, normal propyl acrylate, normal propyl methacrylate, isopropyl acrylate, isopropyl methacrylate, normal butyl acrylate, normal butyl methacrylate, isobutyl acrylate, isobutyl methacrylate, secondary butyl acrylate, secondary butyl methacrylate, tertiary butyl acrylate, tertiary butyl methacrylate, 2-ethylhexyl acrylate, 2-ethylhexyl methacrylate, normal octyl acrylate, normal octyl methacrylate, isooctyl acrylate, isooctyl methacrylate, normal nonyl acrylate, normal nonyl methacrylate, isononyl acrylate, isononyl methacrylate. These may be used alone or in combination of two or more.

The (meth)acrylate-based monomer according to one embodiment of the present invention is preferably a (meth)acrylate having an alkyl group having 2 to 10 carbon atoms, more preferably a (meth)acrylate having an alkyl group having 3 to 9 carbon atoms, and even more preferably a (meth)acrylate having an alkyl group of 4 to 8 carbon atoms. The (meth)acrylate-based monomer according to one embodiment of the present invention is preferably acrylate.

### 1.2.2 Polyfunctional Monomer

The polyfunctional monomer is used to improve the tensile properties and heat-aging resistance of the obtained immersion-molded film. The polyfunctional monomer is a compound having two or more radical polymerization groups in the molecule. From the viewpoints of the flexibility, tensile strength at break, and moldability of the obtained film by the immersion molding, the monomer represented by the formula (1) and the aromatic polyene monomer are preferably used. Examples of the monomer represented by the chemical formula (1) include 1.9-nonanediol dimethacrylate, 1.9-nonanediol diacrylate, neopentyl glycol dimethacrylate, neopentyl glycol diacrylate, 1.6-hexanediol dimethacrylate, 1.6-hexanediol diacrylate, ethylene glycol dimethacrylate, diethylene glycol dimethacrylate, triethylene glycol dimethacrylate, triethylene glycol diacrylate, polyethylene glycol dimethacrylate, polyethylene glycol diacrylate. The aromatic polyene monomer is an aromatic polyene having 10 or more and 30 or less carbon atoms, having a plurality of double bonds (vinyl groups) and a single or a plurality of aromatic groups. Examples of the aromatic polyene monomer unit include units derived from aromatic polyene monomer such as o-divinylbenzene, p-divinylbenzene, m-divinylbenzene, 1,4-divinylnaphthalene, 3,4-divinylnaphthalene, 2,6-divinylnaphthalene, 1,2-divinyl-3,4-dimethylbenzene, 1,3-divinyl-4,5,8-tributylnaphthalene, and any one or a mixture of two or more of the orthodivinylbenzene unit, the paradivinylbenzene unit and the metadivinylbenzene unit is preferably used.

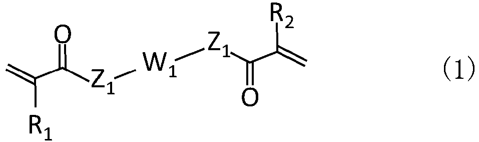

In the formula (1), each of R₁ and R₂ represents any one of hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

W₁ represents any one of a saturated or unsaturated hydrocarbon group, a saturated or unsaturated cyclic hydrocarbon group, a saturated or unsaturated hydrocarbon group containing a hetero atom, and a saturated or unsaturated cyclic hydrocarbon group containing a hetero atom.

Z₁ represents any one of oxygen, sulfur, and a structure represented by -NR₀⁻.

R₀ represents any one of hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

### 1.3 Content of Each Structural Unit of (Meth)acrylate-based Block Copolymer

The content of each structural unit in the (meth)acrylate-based block copolymer is preferably 5 to 30% by mass of the polymer block (A) and 70 to 95% by mass of the (meth)acrylate-based polymer block (B) and is more preferably 5 to 15% by mass of the polymer block (A) and 85 to 95% by mass of the (meth)acrylate-based polymer block (B). When the polymer block (A) is 5% by mass or more, the obtained (meth)acrylate-based block copolymer has improved tensile strength at break. When the polymer block (A) is 30% by mass or less, the obtained (meth)acrylate-based block copolymer has improved flexibility. The polymer block (A) is preferably 15% by mass or less. When the (meth)acrylate-based polymer block (B) is 70% by mass or more, the resulting (meth)acrylate-based block copolymer has improved flexibility. The (meth)acrylate-based polymer block (B) is preferably 85% by mass or more. When the (meth)acrylate-based polymer block (B) is 95% by mass or less, the obtained (meth)acrylate-based block copolymer has improved tensile strength at break. With respect to 100% by mass of the (meth)acrylate-based block copolymer, the content of the polymer block (A) contained in the (meth)acrylate-based block copolymer is, for example, 5, 10, 15, 20, 25 and 30% by mass, and may be within a range between any two of the numerical values exemplified here.

The (meth)acrylate-based block copolymer according to one embodiment of the present invention may contains a polymer block other than polymer block (A) and polymer block (B) as long as the object of the present invention is not impaired. With respect to 100% by mass of the (meth)acrylate-based block copolymer, the total content of the polymer block (A) and the polymer block (B) is preferably 80% by mass or more and more preferably 90% by mass or more.

The (meth)acrylate-based block copolymer according to one embodiment of the present invention can be composed of the polymer block (A) and the polymer block (B), and may not contain other polymer blocks. The (meth)acrylate-based block copolymer may be a diblock copolymer, which is "polymer block (A)-polymer block (B)" and consists of the polymer block (A) and the polymer block (B).

### 1.4 Molecular Weight of (Meth)acrylate-based Block Copolymer

Although the weight average molecular weight of the (meth)acrylate-based block copolymer is not particularly limited, it is preferably 50,000 to 600,000, particularly preferably 100,000 to 500,000, from the viewpoint of moldability.

### 1.5 Method for Producing (Meth)acrylate-based Block Copolymer

A method for producing the (meth)acrylate-based block copolymer according to the present invention will be described. The polymerization method is not particularly limited, and it can be produced by known methods such as solution polymerization, emulsion polymerization, and bulk polymerization. The emulsion polymerization is suitable for obtaining the desired (meth)acrylate-based block copolymer.

The polymerization method is not particularly limited as long as the desired (meth)acrylate-based block copolymer is obtained. It is possible to produce by a production method through a two-step polymerization step comprising polymerization step 1 to synthesize the polymer block (A) and subsequent polymerization step 2 to synthesize the (meth)acrylate-based copolymer block (B).

### (Polymerization Step 1)

Polymerization step 1 will be explained in detail. In emulsion polymerization step 1, the polymer block (A) is synthesized by living radical emulsion polymerization of monomer constituting the polymer block (A). The polymer block (A) obtained here preferably has the glass transition temperature described above. The emulsifier used in the emulsion polymerization is not particularly limited, but an anion-based or nonionic-based emulsifier is preferable from the viewpoint of emulsion stability. It is preferable to use an alkali metal rosin acid salt because the resulting the (meth)acrylate-based block copolymer can have appropriate strength to prevent excessive shrinkage and breakage. The concentration of the emulsifier is preferably 5 to 50% by mass with respect to 100% by mass of the monomer constituting the polymer block (A) from the viewpoint of efficiently performing the polymerization reaction. As the radical polymerization initiator, a known radical polymerization initiator can be used, and for example, potassium persulfate, benzoyl peroxide, hydrogen peroxide, an azo compound, and the like can be used. The amount of pure water added is preferably 100 to 300% by mass with respect to 100% by mass of the monomer constituting the polymer block (A). When the amount of pure water added is 300% by mass or less, a toluene insoluble content of the obtained (meth)acrylate-based block copolymer is within the above-described specific numerical range, and the tensile strength at break is likely to be improved. The polymerization temperature may be appropriately determined depending on the type of the monomer, but is preferably 10 to 100°C, more preferably 20 to 80°C.

### (Polymerization Step 2)

In polymerization step 2, pure water, an emulsifier, and a (meth)acrylate-based monomer, and, if necessary, a polyfunctional monomers are added to the latex containing the polymer block (A) obtained by the living radical emulsion polymerization of polymerization step 1, and an emulsion polymerization is performed to obtain a latex containing the desired (meth)acrylate-based block copolymer. The (meth)acrylate-based monomer may be added all at once or added in a plurality of times. The polymerization temperature in the polymerization step 2 is preferably 10 to 50°C from the viewpoint of ease of polymerization control. The polymerization reaction is stopped by adding a polymerization terminator. Examples of the polymerization terminator include thiodiphenylamine, 4-tert-butylpyrocatechol, 2,2'-methylenebis(4-methyl-6-tert-butylphenol) and the like. After the completion of the emulsion polymerization, the unreacted monomer can be removed by a conventional method such as vacuum distillation.

To the latex containing the (meth)acrylate-based block copolymer obtained in the polymerization step 2, a freeze stabilizer, an emulsion stabilizer, a viscosity modifier, an antioxidant, and a preservative can be added after the polymerization, as long as the object of the present invention is not impaired.

### (Recovery Step)

The method for recovering the (meth)acrylate-based block copolymer from the latex containing the (meth)acrylate-based block copolymer is not particularly limited and a known method, such as a method of recovering by immersing in a coagulating liquid and a method of precipitating with a poor solvent such as methanol, is used.

The (meth)acrylate-based block copolymer preferably has a functional group having a structure represented by the following formula (2) or formula (3). 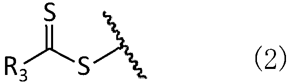 In formula (2), R₃ represents hydrogen, chlorine, substituted or unsubstituted alkyl group, substituted or unsubstituted alkenyl group, substituted or unsubstituted aryl group, substituted or unsubstituted mercapto group, or substituted or unsubstituted heterocyclyl group.

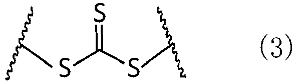

The terminal structure represented by above formula (2) or formula (3) is introduced into the block copolymer by performing emulsion polymerization in the presence of a known RAFT agent. The compound that derives the structure represented by above formula (2) is not particularly limited, and a general compound can be used. Examples thereof include dithiocarbamates and dithioesters. Specifically, benzyl1-pyrrolecarbodithioate (common name: benzyl1-pyrroldithiocarbamate), benzylphenylcarbodithioate, 1-benzyl-N, N-dimethyl-4-aminodithiobenzoate, 1-benzyl-4-methoxydithiobenzoate, 1-phenylethylimidazole carbodithioate (common name: **1-**phenylethylimidazole dithiocarbamate), benzyl-1-(2-pyrrolidinone) carbodithioate, (common name: benzyl-1-(2-pyrrolidinone) dithiocarbamate), benzylphthalimidylcarbodithioate, (common name: benzylphthalimidyl dithiocarbamate), 2-cyanoprop-2-yl-1-pyrrolecarbodithioate, (common name: 2-cyanoprop-2-yl-1-pyrroledithiocarbamate), 2-cyanobut-2-yl-1-pyrrolecarbodithioate, (common name: 2-cyanobut-2-yl-1-pyrrole dithiocarbamate), benzyl-1-imidazole carbodithioate, (common name: benzyl-1-imidazole dithiocarbamate), 2-cyanoprop-2-yl-N, N-dimethyldithiocarbamate, benzyl-N, N-diethyldithiocarbamate, cyanomethyl-1-(2-pyrrolidone) dithiocarbamate, 2-(ethoxycarbonylbenzyl) prop-2-yl-N, N-diethyldithiocarbamate, 1-phenylethyldithiobenzoate, 2-phenylprop-2-yldithiobenzoate, 1-acetic acid-1-yl-ethyldithiobenzoate, 1-(4-methoxyphenyl) ethyldithiobenzoate, benzyldithioacetate, ethoxycarbonylmethyldithioacetate, 2-(ethoxycarbonyl) prop-2-yldithiobenzoate, 2-cyanoprop-2-yldithiobenzoate, tert-butyldithiobenzoate, 2,4,4-trimethylpenta-2-yldithiobenzoate, 2-(4-chlorophenyl)-prop-2-yldithiobenzoate, 3-vinylbenzyldithiobenzoate, 4-vinylbenzyldithiobenzoate, benzyldiethoxyphosphinyldithioformate, tert-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzylsulfanylbutyric acid, dibenzyltetrathioterephthalate, carboxymethyldithiobenzoate, poly (ethylene oxide) with a dithiobenzoate terminal group, poly (ethylene oxide) with 4-cyano-4-methyl-4-thiobenzylsulfanylbutyric acid terminal group, 2-[(2-phenylethanethioyl)sulfanyl] propanoic acid, 2-[(2-phenylethanethioyl) sulfanyl] succinic acid, 3,5-dimethyl-1H-pyrazole-1-carbodithioate potassium, cyanomethyl-3,5-dimethyl-1H-pyrazole-1-carbodithioate, cyanomethyl-N-methyl-N-phenyldithiocarbamate, benzyl-4-chlorodithiobenzoate, phenylmethyl-4-chlorodithiobenzoate, 4-nitrobenzyl-4-chlorodithiobenzoate, phenylprop-2-yl-4-chlorodithiobenzoate, 1-cyano-1-methylethyl-4-chlorodithiobenzoate, 3-chloro-2-butenyl-4-chlorodithiobenzoate, 2-chloro-2-butenyldithiobenzoate, benzyldithioacetate, 3-chloro-2-butenyl-1H-pyrrole-1-dithiocarboxylic acid, and 2-cyanobutane-2-yl 4-chloro-3,5-dimethyl-1H-pyrazole-1-carbodithioate. Of these, benzyl1-pyrrole carbodithioate and benzylphenylcarbodithioate are particularly preferable.

The compound that derives the structure represented by the above formula (3) is not particularly limited, and a general compound can be used. For example, trithiocarbonates such as 2-cyano-2-propyldodecyltrithiocarbonate, dibenzyltrithiocarbonate, butylbenzyltrithiocarbonate, 2-[[(butylthio) thioxomethyl] thio] propionic acid, 2-[[(dodecylthio) thioxomethyl] thio] propionic acid, 2-[[(butylthio) thioxomethyl] thio] succinic acid, 2-[[(dodecylthio) thioxomethyl] thio] succinic acid, 2-[[(dodecylthio) thioxomethyl] thio]-2-methylpropionic acid, 2,2'-[carbonothioylbis (thio)] bis [2-methylpropionic acid], 2-amino-1-methyl-2-oxoethylbutyltrithiocarbonate, benzyl2-[(2-hydroxyethyl) amino]-1-methyl-2-oxoethyltrithiocarbonate, 3-[[[(tert-butyl) thio] thioxomethyl] thio] propionic acid, cyanomethyldodecyltrithiocarbonate, diethylaminobenzyltrithiocarbonate, and dibutylaminobenzyltrithiocarbonate can be mentioned. Of these, dibenzyltrithiocarbonate and butylbenzyltrithiocarbonate are particularly preferably used.

The (meth)acrylate-based copolymer according to one embodiment of the present invention preferably has at least one structure of a structure derived from the polyfunctional monomer, a structure represented by the formula (2), and a structure represented by the formula (3).

### 2. (Meth)acrylate-based Block Copolymer Latex

The (meth)acrylate-based block copolymer latex according to one embodiment of the present invention contains the (meth)acrylate-based block copolymer described above. The (meth)acrylate-based block copolymer latex according to one embodiment of the present invention is preferably for immersion molded body. The latex according to one embodiment of the present invention can be immersed in a coagulation liquid and molded to obtain an immersion molded body. The immersion molded body can be suitably used for gloves, balloons, catheters, boots, and the like.

The latex of the present embodiment can be obtained by a method of using the synthesized liquid, which is obtained at the end of emulsion polymerization as described in the method for producing the (meth)acrylate-based block copolymer, as the latex as it is, or a method of forcibly emulsifying the recovered (meth)acrylate-based block copolymer using an emulsifier to obtain the latex. The method of using the synthesized liquid, which is obtained at the end of emulsion polymerization, as the latex is preferable because the latex can be easily obtained.

### 2.1 Toluene Insoluble Content of (Meth)acrylate-based Block Copolymer Latex

The (meth)acrylate-based block copolymer latex according to one embodiment of the present invention preferably contain 20 to 100% by mass and more preferably 70 to 100% by mass of toluene insoluble content with respect to 100% by mass of the (meth)acrylate-based block copolymer latex. When the toluene insoluble content is above the lower limit, it is considered that the structure in which block copolymers are chemically bonded to each other is included, thereby improving the tensile strength at break. The toluene insoluble content can be, for example, 20, 25, 30, 35, 40, 45, 50, 55, 60, 65, 70, 75, 80, 85, 90, 95, 100% by mass, and may be in the range between the two values exemplified herein.

In the present specification, the toluene insoluble content is obtained by dissolving a freeze-dried latex containing the (meth)acrylate-based block copolymer in toluene, centrifuging the resulting mixture, separating the gel component by a 200-mesh wire mesh, measuring the weight of the dried gel component and calculating with the following formula. (Weight of the solid obtained by separating and drying the gel component)/(Weight of the solid obtained by freeze-drying latex containing the (meth)acrylate-based block copolymer)× 100

The toluene insoluble content can be adjusted by controlling the type and amount of the raw material compounded in the polymerization of the (meth)acrylate-based block copolymer and the polymerization conditions and controlling the type and amount of the polymer block, for example, the type and amount of the polyfunctional monomer unit, and the type, amount, and structure of functional group derived from the RAFT agent and the like.

### 2.2 Average Particle Size of Latex for (Meth)acrylate-based Block Copolymer Latex

The (meth)acrylate-based block copolymer latex preferably has an average particle size of 300 nm or less measured by a dynamic light scattering method, and the average particle size is more preferably 250 nm or less, and even more preferably 200 nm or less from the viewpoint of mechanical stability of the latex. The lower limit can be, for example, 100 nm or more. The average particle size is, for example, 100, 120, 140, 150, 160, 170, 180, 190, 200, 220, 240, 260, 280, 300 nm, and may be in the range between the two values exemplified herein.

In the present specification, the average particle size is an average particle size measured by a dynamic light scattering method and calculated by a photon correlation method. The average particle size can be adjusted by controlling the type and amount of the raw material compounded in the (meth)acrylate-based block copolymer latex and the production conditions, for example the agitation conditions during emulsion polymerization.

### 2.3 Mechanical Stability of (Meth)acrylate-based Block Copolymer Latex

The mechanical stability of the (meth)acrylate-based block copolymer latex according to one embodiment of the present invention is preferably 5% by mass or less, more preferably 2% by mass or less, and even more preferably 1% by mass or less. The mechanical stability of the (meth)acrylate-based block copolymer latex can be evaluated by the measuring method described in Examples. The mechanical stability can be adjusted by controlling the type and amount of the raw material compounded in the (meth)acrylate-based block copolymer latex and the production conditions. For example, the mechanical stability can be adjusted by controlling the average particle size of the (meth)acrylate-based block copolymer latex.

### 2.4 Tensile Properties of (Meth)acrylate-based Block Copolymer Latex

When the (meth)acrylate-based block copolymer latex containing the (meth)acrylate-based block copolymer is molded by immersion molding to obtain an immersion-molded film and then the film is heat-treated at 130°C for 30 minutes, a tensile strength at break measured in accordance with JIS K 6251 of the film is 14 MPa or more and an unvulcanized immersion-molded film containing no vulcanizing agent and no vulcanizing accelerator can be provided. The unvulcanized immersion-molded film has flexibility and exhibits sufficient mechanical strength even if containing no vulcanizing agent and no vulcanizing accelerator. The tensile strength at break is preferably 15 MPa or more, more preferably 16 MPa or more, further preferably 17 MPa or more, and even more preferably 20 MPa or more. The upper limit is not particularly limited, but is, for example, 30 MPa or less. The tensile strength at break can be, for example, 14, 15, 16, 17, 18, 19, 20, 21, 22, 23, 24, 25, 26, 27, 28, 29, 30 MPa, and may be in the range between the two values exemplified herein.

When the (meth)acrylate-based block copolymer latex containing the (meth)acrylate-based block copolymer is molded by immersion molding to obtain an immersion-molded film, and then the film is heat-treated at 130°C for 30 minutes and further subjected to a heat-aging test at 100°C for 22 hours, a tensile strength at break measured in accordance with JIS K 6251 of the film is preferably14 MPa or more, more preferably 15 MPa or more, even more preferably 16 MPa or more, further preferably 17 MPa or more, and particularly preferably 20 MPa or more. The upper limit is not particularly limited, but is, for example, 30 MPa or less.

When the (meth)acrylate-based block copolymer latex containing the (meth)acrylate-based block copolymer is molded by immersion molding to obtain an immersion-molded film and then the film is heat-treated at 130°C for 30 minutes, an elongation at break measured in accordance with JIS K6251 is preferably 900% or more, more preferably 905% or more, and even more preferably 910% or more. The upper limit is not particularly limited, but is, for example, 1300% or less.

In the (meth)acrylate-based block copolymer latex according to one embodiment of the present invention, when the (meth)acrylate-based block copolymer latex containing the (meth)acrylate-based block copolymer is molded by immersion molding to obtain an immersion-molded film and then the film is heat-treated at 130°C for 30 minutes and further subjected to a heat-aging test at 100°C for 22 hours, an elongation at break measured in accordance with JIS K 6251 is preferably 900% or more, more preferably 905% or more, and even more preferably 910% or more. The upper limit is not particularly limited, but is, for example, 1300% or less.

When the (meth)acrylate-based block copolymer latex containing the (meth)acrylate-based block copolymer is molded by immersion molding to obtain an immersion-molded film and then the film is heat-treated at 130°C for 30 minutes, a modulus at 500% in accordance with JIS K 6251 is preferably 3.0 MPa or less, more preferably 2.9 MPa or less, and even more preferably 2.8 MPa. The lower limit is not particularly limited, but is, for example, 1.0 MPa or higher.

In the (meth)acrylate-based block copolymer according to one embodiment of the present invention, when the (meth)acrylate-based block copolymer latex containing the (meth)acrylate-based block copolymer is molded by immersion molding to obtain an immersion-molded film, and then the film is heat-treated at 130°C for 30 minutes and further subjected to a heat-aging test at 100°C for 22 hours, a modulus at 500% in accordance with JIS K 6251 is preferably 3.0 MPa or less, more preferably 2.9 MPa or less, and even more preferably 2.8 MPa. The lower limit is not particularly limited, but is, for example, 1.0 MPa or higher.

The above immersion-molded film can be obtained by the method described in the Examples, and the immersion-molded film can be molded with no vulcanizing agent and no vulcanizing accelerator.

The tensile strength at break, elongation at break, and modulus at 500% elongation of the immersion-molded film obtained by immersion molding the (meth)acrylate-based block copolymer latex containing the (meth)acrylate-based block copolymer can be adjusted by controlling the amount of the polyfunctional monomer unit contained in the (meth)acrylate-based polymer block (B), the content of the (meth)acrylate-based polymer block(B) in the (meth)acrylate-based block copolymer, or the type and amount of the functional group introduced by polymerizing in the presence of the RAFT agent described later.

The immersion-molded film obtained from the (meth)acrylate-based block copolymer latex of the present embodiment may contain a vulcanizing agent or a vulcanizing accelerator. When the immersion-molded film contains a vulcanizing agent and a vulcanizing accelerator, the total content thereof with respect to 100% by mass of the (meth)acrylate-based block copolymer latex contained in the immersion-molded film can be 5% by mass or less, more preferably 1% by mass or less, and more preferably 0.1% by mass or less. However, since the unvulcanized immersion-molded film has sufficient mechanical strength even if it does not contain a vulcanizing agent or a vulcanizing accelerator, it preferably contains no vulcanizing agent and the vulcanizing agent from the viewpoint of reducing allergies and costs.

### 3. (Meth)acrylate-based Block Copolymer Latex Composition

The (meth)acrylate-based block copolymer latex composition according to one embodiment of the present invention contains the (meth)acrylate-based block copolymer latex containing the (meth)acrylate-based block copolymer described above.

### 3.1 Components Contained in (Meth)acrylate-based Block Copolymer Latex Composition

The (meth)acrylate-based block copolymer latex composition according to the present embodiment contains the (meth)acrylate-based block copolymer. Raw materials other than the (meth)acrylate-based block copolymer are not particularly limited, and can be appropriately selected according to the purpose and application. Raw materials that can be contained in the latex composition and rubber composition containing the (meth)acrylate-based block copolymer include, for example, a vulcanizing agent, a vulcanization accelerator, fillers or a reinforcing agent, a plasticizer, a processing aid or a lubricant, an antioxidant, a silane coupling agent, and the like.

The latex composition of this embodiment may contain a vulcanizing agent or vulcanization accelerator. When the latex composition according to one embodiment of the present invention contains a vulcanizing agent and/or a vulcanization accelerator, the total content of the vulcanizing agent and the vulcanization accelerator with respect to 100 % by mass of the (meth)acrylate-based block copolymer latex contained in the (meth)acrylate-based block copolymer latex composition may be 5% by mass or less, more preferably 1% by mass or less, and more preferably 0.1% by mass. However, the latex composition containing the (meth)acrylate-based block copolymer of the present embodiment has sufficient mechanical strength without vulcanization. Therefore, from the viewpoint of allergenicity reduction and cost reduction, it preferably contain no vulcanizing agent and no vulcanizing agent.

As an antioxidant to improve heat resistance, a primary antioxidant that captures radicals and prevents autoxidation, which is used in ordinary rubber applications, and a secondary antioxidant that renders hydroperoxide harmless can be added. The amount of these antioxidants added can be 0.1 part by mass or more and 10 parts by mass or less, preferably 2 parts by mass and 5 parts by mass or less, with respect to 100 parts by mass of the latex component in the latex composition. These antioxidants can be used alone, or two or more of these can be used in combination. Examples of the primary antioxidant may include phenol-based antioxidants, amine-based antioxidants, acrylate-based antioxidants, imidazole-based antioxidants, carbamic acid metal salts, and waxes. In addition, examples of the secondary antioxidant may include phosphorus-based antioxidants, sulfur-based antioxidants, and imidazole-based antioxidants. Examples of the antioxidant are not particularly limited and may include N-phenyl-1-naphthylamine, alkylated diphenylamine, octylated diphenylamine, 4,4'-bis (α,α-dimethylbenzyl) diphenylamine, p-(p-toluenesulfonylamide) diphenylamine, N, N'-di-2-naphthyl-p-phenylenediamine, N, N'-diphenyl-p-phenylenediamine, N-phenyl-N'-isopropyl-p-phenylenediamine, N-phenyl-N'-(1,3-dimethylbutyl)-p-phenylenediamine, N-phenyl-N'-(3-methacryloyloxy-2-hydroxypropyl)-p-phenylenediamine, 1,1,3-tris-(2-methyl-4-hydroxy-5-t-butylphenyl) butane, 4,4'-butylidenebis-(3-methyl-6-t-butylphenol), 2,2-thiobis (4-methyl-6-t-butylphenol), 7-octadecyl-3-(4'-hydroxy-3', 5'-di-t-butylphenyl) propionate, tetrakis-[methylene-3-(3', 5'-di-t-butyl-4'-hydroxyphenyl) propionate] methane, pentaerythritol-tetrakis [3-(3,5-di-t-butyl-4-hydroxyphenyl) propionate], triethylene glycol-bis [3-(3-t-butyl-5-methyl-4-hydroxyphenyl) propionate], 1,6-hexanediol-bis [3-(3,5-di-t-butyl-4-hydroxyphenyl) propionate], 2,4-bis (n-octylthio)-6-(4-hydroxy-3,5-di-t-butylanilino)-1,3,5-triazine, tris3,5-di-t-butyl-4-hydroxybenzyl)-isocyanurate, 2,2-thio-diethylene bis [3-(3,5-di-t-butyl-4-hydroxyphenyl) propionate], N, N'-hexamethylenebis (3,5-di-t-butyl-4-hydroxy)-hydrocinnaamide, 2,4-bis [(octylthio) methyl]-o-cresol, 3,5-di-t-butyl-4-hydroxybenzyl-phosphonate-diethyl ester, tetrakis [methylene (3,5-di-t-butyl-4-hydroxyhydrocinnamate)] methane, octadecyl-3-(3,5-di-t-butyl-4-hydroxyphenyl) propionic acid ester, 3,9-bis [2-{3-(3-t-butyl-4-hydroxy-5-methylphenyl) propionyloxy}-1,1-dimethylethyl]-2,4,8,10-tetraoxaspiro [5.5] undecane, tris (nonyl phenyl) phosphite, tris (mixed mono- and di-nonylphenyl) phosphite, diphenyl mono (2-ethylhexyl) phosphite, diphenyl monotridecyl phosphite, diphenyl isodecyl phosphite, diphenyl isooctyl phosphite, diphenyl nonylphenyl phosphite, triphenylphosphite, tris (tridecyl) phosphite, triisodecylphosphite, tris (2-ethylhexyl) phosphite, tris (2,4-di-t-butylphenyl) phosphite, tetraphenyldipropylene glycol diphosphite, tetraphenyltetra (tridecylic) pentaerythritol tetraphosphite, 1,1,3-tris (2-methyl-4-di-tridecylphosphite-5-t-butylphenyl) butane, 4,4'-butylidenebis-(3-methyl-6-t-butyl-di-tridecylphosphite), 2,2'-etilidenebis (4,6-di-t-butylphenol) fluorophosphite, 4,4'-isopropylidene-diphenolalkyl (C12-C15) phosphite, cyclic neopentane tetraylbis (2,4-di-t-butylphenylphosphite), cyclic neopentane tetraylbis (2,6-di-t-butyl-4-phenylphosphite), cyclic neopentane tetraylbis (nonylphenylphosphite), bis (nonylphenyl) pentaerythritol diphosphite, dibutyl hydrogen phosphite, distearyl pentaerythritol diphosphite and hydrogenated bisphenol A pentaerythritol phosphite polymer, 2-mercaptobenzimidazole, butylation reaction products of p-cresol and dicyclopentadiene.

The latex composition can be produced according to conventional methods using known machines and devices.

### 4. molded body

A molded body according to one embodiment of the present invention contains the above-described (meth)acrylate-based block copolymer latex composition and is preferably made of the above-described (meth)acrylate-based block copolymer latex composition.

The components that may be included in the molded body according to one embodiment of the present invention are as described above for the (meth)acrylate-based block copolymer latex composition. Further, the properties that the molded body according to one embodiment of the present invention may havs are as described above in the tensile properties of the (meth)acrylate-based block copolymer latex.

### EXAMPLES

Hereinafter, the present invention will be described with reference to Examples and Comparative Examples, but these are merely exemplary and do not limit the content of the present invention.

### (Example 1)

### (Polymerization Step 1) Synthesis of polymer block (A-1)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The sampled latex was mixed with a large amount of methanol to precipitate a resin component and the precipitate was filtered and dried to obtain a sample of the polymer block (A-1). By analyzing the obtained sample, the number average molecular weight, molecular weight distribution, and glass transition temperature of the polymer block (A) were determined. The analysis results are shown in Table 1. The methods for measuring the "number average molecular weight", "molecular weight distribution", and "glass transition temperature" will be described later.

### (Polymerization Step 2) Synthesis of (meth)acrylate-based polymer block (B-1)

After the polymerization step 1, when the internal temperature dropped to 45°C, 4480 g of n-butyl acrylate monomer and 91.4 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation.

A part of the sampled latex was used to measure the average particle size of the latex and the mechanical stability of the latex. The analysis results are shown in Table 1. The measurement method will be described later. The sampled latex was mixed with a large amount of methanol to precipitate the resin component and the precipitate was filtered and dried to obtain a sample of the (meth)acrylate-based block copolymer. By analyzing the obtained sample, the content (mass%) of the polymer block (A-1) of and the (meth)acrylate-based polymer block (B-1) in the n-butyl acrylate-based copolymer were determined. The analysis results are shown in Table 1. The measurement method is described below. Also, the toluene insoluble content was obtained from the sampled latex. The analysis results are shown in Table 1. The measuring method is described later.

### (Example 2)

### (Polymerization Step 1) Synthesis of polymer block (A-2)

Polymerization was carried out using an autoclave with a capacity of 10 L and a stirrer and a jacket for heating and cooling. 3333 g of pure water, 160 g of disproportionated potassium rosinate (manufactured by Harima Chemicals Group, Inc.), 26.0 g of potassium hydroxide, 13.3 g of sodium salt of β-naphthalene sulfonic acid formalin condensate (manufactured by Kao Corporation, product name: DEMOL N), 250 g of styrene monomer and 4.33 g of butylbenzyl trithiocarbonate were charged, the internal temperature was set to 80°C, and the mixture was stirred under a nitrogen stream at 200 rpm. By adding 2.73 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-2) were determined by analysis in the same manner as in Example 1. The analysis results are shown in Table 1.

### (Polymerization Step 2) Synthesis of (meth)acrylate-based polymer block (B-2)

After the polymerization step 1, when the internal temperature dropped to 45°C, 5584 g of n-butyl acrylate monomer and 114.0 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-2) and the (meth)acrylate-based polymer block (B -2) in the n-butyl acrylate-based copolymer were determined by analysis as in Example 1. Also, the toluene insoluble content was obtained from the sampled latex. The analysis results are shown in Table 1.

### (Example 3)

### (Polymerization Step 1) Synthesis of polymer block (A-3)

Polymerization was carried out using an autoclave with a capacity of 10 L and a stirrer and a jacket for heating and cooling. 5733 g of pure water, 275 g of disproportionated potassium rosinate (manufactured by Harima Chemicals Group, Inc.), 44.7 g of potassium hydroxide, 22.9 g of sodium salt of β-naphthalene sulfonic acid formalin condensate (manufactured by Kao Corporation, product name: DEMOL N), 430 g of styrene monomer and 7.45 g of butylbenzyl trithiocarbonate were charged, the internal temperature was set to 80°C, and the mixture was stirred under a nitrogen stream at 200 rpm. By adding 4.69 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-3) were determined by analysis in the same manner as in Example 1. The analysis results are shown in Table 1.

### (Polymerization Step 2) Synthesis of (meth)acrylate-based polymer block (B-3)

After the polymerization step 1, when the internal temperature dropped to 45°C, 3094 g of n-butyl acrylate monomer and 63.1 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-3) and the (meth)acrylate-based polymer block (B -3) in the n-butyl acrylate-based copolymer were determined by analysis as in Example 1. Also, the toluene insoluble content was obtained from the sampled latex. The analysis results are shown in Table 1.

### (Example 4)

### (Polymerization Step 1) Synthesis of polymer block (A-4)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-4) were determined by analysis in the same manner as in Example 1. The analysis results are shown in Table 1.

### (Polymerization Step 2) Synthesis of (meth)acrylate-based polymer block (B-4)

After the polymerization step 1, when the internal temperature dropped to 45°C, 4480 g of n-butyl acrylate monomer and 91.4 g of 1.9-nonanediol diacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-4) and the (meth)acrylate-based polymer block (B-4) in the n-butyl acrylate-based copolymer were determined by analysis as in Example 1. Also, the toluene insoluble content was obtained from the sampled latex. The analysis results are shown in Table 1.

### (Example 5)

### (Polymerization Step 1) Synthesis of polymer block (A-5)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-5) were determined by analysis in the same manner as in Example 1. The analysis results are shown in Table 1.

### (Polymerization Step 2) Synthesis of (meth)acrylate-based polymer block (B-5)

After the polymerization step 1, when the internal temperature dropped to 45°C, 4480 g of n-butyl acrylate monomer and 91.4 g of LIGHT ESTER EG (manufactured by kyoeisha Chemical Co.,Ltd.), which is ethylene glycol diacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-5) and the (meth)acrylate-based polymer block (B -5) in the n-butyl acrylate-based copolymer were determined by analysis as in Example 1. Also, the toluene insoluble content was obtained from the sampled latex. The analysis results are shown in Table 1.

### (Example 6)

### (Polymerization Step 1) Synthesis of polymer block (A-6)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-6) were determined by analysis in the same manner as in Example 1. The analysis results are shown in Table 1.

### (Polymerization Step 2) Synthesis of (meth)acrylate-based polymer block (B-6)

After the polymerization step 1, when the internal temperature dropped to 45°C, 4480 g of n-butyl acrylate monomer and 93.3 g of divinylbenzene were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-6) and the (meth)acrylate-based polymer block (B-6) in the n-butyl acrylate-based copolymer were determined by analysis as in Example 1. Also, the toluene insoluble content was obtained from the sampled latex. The analysis results are shown in Table 1.

### (Example 7)

### (Polymerization Step 1) Synthesis of polymer block (A-7)

Polymerization was carried out using an autoclave with a capacity of 10 L and a stirrer and a jacket for heating and cooling. 5450 g of pure water, 262 g of disproportionated potassium rosinate (manufactured by Harima Chemicals Group, Inc.), 42.5 g of potassium hydroxide, 21.8 g of sodium salt of β-naphthalene sulfonic acid formalin condensate (manufactured by Kao Corporation, product name: DEMOL N), 2500 g of styrene monomer and 43.3 g of butylbenzyl trithiocarbonate were charged, the internal temperature was set to 80°C, and the mixture was stirred under a nitrogen stream at 200 rpm. By adding 27.3 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-7) were determined by analysis in the same manner as in Example 1. The analysis results are shown in Table 1.

### (Polymerization Step 2) Synthesis of (meth)acrylate-based polymer block (B-7)

Polymerization was carried out using an autoclave with a capacity of 10 L and a stirrer and a jacket for heating and cooling. 2732 g of pure water, 131 g of disproportionated potassium rosinate (manufactured by Harima Chemicals Group, Inc.), 21.3 g of potassium hydroxide, 10.9 g of sodium salt of β-naphthalene sulfonic acid formalin condensate (manufactured by Kao Corporation, product name: DEMOL N), and 783 g of the latex containing polymer block (A-7) produced in polymerization step 1 were charged, the internal temperature was set to 45°C, and the mixture was stirred under a nitrogen stream at 200 rpm. Then, 3000 g of n-butyl acrylate monomer was slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-7) and the (meth)acrylate-based polymer block (B-7) in the (meth)acrylate-based block copolymer were determined by analysis as in Example 1. The analysis results are shown in Table 1. Also, the toluene insoluble content was obtained from the sampled latex. The analysis results are shown in Table 1.

### (Example 8)

### (Polymerization Step 1) Synthesis of polymer block (A-8)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-8) were determined by analysis in the same manner as in Example 1. The analysis results are shown in Table 1.

### (Polymerization Step 2) Synthesis of (meth)acrylate-based polymer block (B-8)

After the polymerization step 1, when the internal temperature dropped to 45°C, 4480 g of n-butyl acrylate monomer and 91.4 g of triallyl isocyanurate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-8) and the (meth)acrylate-based polymer block (B-8) in the n-butyl acrylate-based copolymer were determined by analysis as in Example 1. Also, the toluene insoluble content was obtained from the sampled latex. The analysis results are shown in Table 1.

### (Example 9)

### (Polymerization Step 1) Synthesis of polymer block (A-9)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-9) were determined by analysis in the same manner as in Example 1. The analysis results are shown in Table 1.

### (Polymerization Step 2) Synthesis of (meth)acrylate-based polymer block (B-9)

After the polymerization step 1, when the internal temperature dropped to 45°C, 4480 g of n-butyl acrylate monomer and 91.4 g of hydroxypyvalypivlate diacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (% by mass) of the polymer block (A-9) and the (meth)acrylate-based polymer block (B-9) in the n-butyl acrylate-based copolymer were determined by analysis as in Example 1. Also, the toluene insoluble content was obtained from the sampled latex. The analysis results are shown in Table 1.

### (Example 10)

### (Polymerization Step 1) Synthesis of polymer block (A-10)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The number average molecular weight, molecular weight distribution, and glass transition temperature of the polymer block (A-10) were determined by analysis in the same manner as in Example 1. The analysis results are shown in Table 1.

### (Polymerization Step 2) Synthesis of (meth)acrylate-based polymer block (B-10)

After the polymerization step 1, when the internal temperature dropped to 45°C, 4480 g of n-butyl acrylate monomer and 91.4 g of trimethylolpropane triacrylate (manufactured by kyoeisha Chemical Co.,Ltd.) were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-10) and the (meth)acrylate-based polymer block (B-10) in the n-butyl acrylate-based copolymer were determined by analysis as in Example 1. Also, the toluene insoluble content was obtained from the sampled latex. The analysis results are shown in Table 1.

### (Example 11)

### (Polymerization Step 1) Synthesis of polymer block (A-11)

Polymerization was carried out using an autoclave with a capacity of 10 L and a stirrer and a jacket for heating and cooling. 6667 g of pure water, 320 g of disproportionated potassium rosinate (manufactured by Harima Chemicals Group, Inc.), 52.0 g of potassium hydroxide, 26.7 g of sodium salt of β-naphthalene sulfonic acid formalin condensate (manufactured by Kao Corporation, product name: DEMOL N), 500 g of styrene monomer and 6.50 g of butylbenzyl trithiocarbonate were charged, the internal temperature was set to 80°C, and the mixture was stirred under a nitrogen stream at 200 rpm. By adding 4.09 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The number average molecular weight, molecular weight distribution, and glass transition temperature of the polymer block (A-11) were determined by analysis in the same manner as in Example 1. The analysis results are shown in Table 1.

### (Polymerization Step 2) Synthesis of (meth)acrylate-based polymer block (B-11)

After the polymerization step 1, when the internal temperature dropped to 45°C, 1607 g of n-butyl acrylate monomer and 32.8 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-11) and the (meth)acrylate-based polymer block (B-11) in the n-butyl acrylate-based copolymer were determined by analysis as in Example 1. Also, the toluene insoluble content was obtained from the sampled latex. The analysis results are shown in Table 1.

### (Example 12)

### (Polymerization Step 1) Synthesis of polymer block (A-12)

Polymerization was carried out using an autoclave with a capacity of 10 L and a stirrer and a jacket for heating and cooling. 5450 g of pure water, 262 g of disproportionated potassium rosinate (manufactured by Harima Chemicals Group, Inc.), 42.5 g of potassium hydroxide, 21.8 g of sodium salt of β-naphthalene sulfonic acid formalin condensate (manufactured by Kao Corporation, product name: DEMOL N), 2500 g of styrene monomer and 32.5 g of butylbenzyl trithiocarbonate were charged, the internal temperature was set to 80°C, and the mixture was stirred under a nitrogen stream at 200 rpm. By adding 20.5 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-12) were determined by analysis in the same manner as in Example 1. The analysis results are shown in Table 1.

### (Polymerization Step 2) Synthesis of (meth)acrylate-based polymer block (B-12)

Polymerization was carried out using an autoclave with a capacity of 10 L and a stirrer and a jacket for heating and cooling. 1188 g of pure water, 57 g of disproportionated potassium rosinate (manufactured by Harima Chemicals Group, Inc.), 9.3 g of potassium hydroxide, 4.8 g of sodium salt of β-naphthalene sulfonic acid formalin condensate (manufactured by Kao Corporation, product name: DEMOL N), and 3147 g of the latex containing polymer block (A-12) made in polymerization step 1 were charged, the internal temperature was set to 45°C, and the mixture was stirred under a nitrogen stream at 200 rpm. Then, 3000 g of n-butyl acrylate monomer was slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, the content (mass %) of the polymer block (A-12) and the (meth)acrylate-based polymer block (B-12) in the (meth)acrylate-based block copolymer, and toluene insoluble content were determined by analysis as in Example 1. The analysis results are shown in Table 1. Also, the toluene insoluble dontent was obtained from the sampled latex. The analysis results are shown in Table 1.

### (Example 13)

### (Polymerization Step 1) Synthesis of polymer block (A-13)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of methyl methacrylate monomer and 4.14 g of butyl-2-cyanoisopropyltrithiocarbonate were charged, the internal temperature was set to 80°C, and the mixture was stirred under a nitrogen stream at 200 rpm. By adding 2.87 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-13) were determined by analysis in the same manner as in Example 1. The analysis results are shown in Table 1.

### (Polymerization Step 2) Synthesis of (meth)acrylate-based polymer block (B-13)

After the polymerization step 1, when the internal temperature dropped to 45°C, 4424 g of n-butyl acrylate monomer and 90.3 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-13) and the (meth)acrylate-based polymer block (B-13) in the n-butyl acrylate-based copolymer were determined by analysis as in Example 1. Also, the toluene insoluble content was obtained from the sampled latex. The analysis results are shown in Table 1.

### (Comparative Example 1)

### (Polymerization Step 1) Synthesis of polymer block (A-14)

Polymerization was carried out using an autoclave with a capacity of 10 L and a stirrer and a jacket for heating and cooling. 3067 g of pure water, 147 g of disproportionated potassium rosinate (manufactured by Harima Chemicals Group, Inc.), 23.9 g of potassium hydroxide, 12.3 g of sodium salt of β-naphthalene sulfonic acid formalin condensate (manufactured by Kao Corporation, product name: DEMOL N), 230 g of styrene monomer and 3.99 g of butylbenzyl trithiocarbonate were charged, the internal temperature was set to 80°C, and the mixture was stirred under a nitrogen stream at 200 rpm. By adding 2.51 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-14) were determined by analysis in the same manner as in Example 1. The analysis results are shown in Table 1.

### (Polymerization Step 2) Synthesis of (meth)acrylate-based polymer block (B-14)

After the polymerization step 1, when the internal temperature dropped to 45°C, 7278 g of n-butyl acrylate monomer and 148.5 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-14) and the (meth)acrylate-based polymer block (B-14) in the n-butyl acrylate-based copolymer were determined by analysis as in Example 1. Also, the toluene insoluble content was obtained from the sampled latex. The analysis results are shown in Table 1.

### (Comparative Example 2)

### (Polymerization Step 1) Synthesis of polymer block (A-15)

Polymerization was carried out using an autoclave with a capacity of 10 L and a stirrer and a jacket for heating and cooling. 6667 g of pure water, 320 g of disproportionated potassium rosinate (manufactured by Harima Chemicals Group, Inc.), 52.0 g of potassium hydroxide, 26.7 g of sodium salt of β-naphthalene sulfonic acid formalin condensate (manufactured by Kao Corporation, product name: DEMOL N), 500 g of styrene monomer and 4.27 g of butylbenzyl trithiocarbonate were charged, the internal temperature was set to 80°C, and the mixture was stirred under a nitrogen stream at 200 rpm. By adding 2.69 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The number average molecular weight, molecular weight distribution, and glass transition temperature of the polymer block (A-15) were determined by analysis in the same manner as in Example 1. The analysis results are shown in Table 1.

### (Polymerization Step 2) Synthesis of (meth)acrylate-based polymer block (B-15)

After the polymerization step 1, when the internal temperature dropped to 45°C, 1607 g of n-butyl acrylate monomer and 32.8 g of 1.9-nonanediol dimethacrylate were slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-15) and the (meth)acrylate-based polymer block (B-15) in the n-butyl acrylate-based copolymer were determined by analysis as in Example 1. Also, the toluene insoluble content was obtained from the sampled latex. The analysis results are shown in Table 1.

### (Comparative Example 3)

### Synthesis of copolymer of (meth)acrylate-based polymer block (B-16) only

Polymerization was carried out using an autoclave with a capacity of 10 L and a stirrer and a jacket for heating and cooling. 3600 g of pure water, 175 g of disproportionated potassium rosinate (manufactured by Harima Chemicals Group, Inc.), 28.4 g of potassium hydroxide, 16.0 g of sodium salt of β-naphthalene sulfonic acid formalin condensate (manufactured by Kao Corporation, product name: DEMOL N), 4000 g of n-butyl acrylate monomer, 81.6 g of 1.9-nonanediol dimethacrylate and 4.72 g of butylbenzyl trithiocarbonate were charged, the internal temperature was set to 45°C, and the mixture was stirred under a nitrogen stream at 200 rpm. By adding 2.96 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. When the polymerization rate of the n-butyl acrylate monomer reaches 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex and the mechanical stability of the latex were determined by analysis in the same manner as in Example 1. Also, the toluene insoluble content was obtained from the sampled latex. The analysis results are shown in Table 1.

### (Comparative Example 4)

### (Polymerization step 1) Synthesis of polymer block (A-17)

Polymerization was carried out using an autoclave with a capacity of 10 L and a stirrer and a jacket for heating and cooling. 4616 g of pure water, 206 g of disproportionated potassium rosinate (manufactured by Harima Chemicals Group, Inc.), 2.3 g of potassium hydroxide, 46.2 g of sodium salt of β-naphthalene sulfonic acid formalin condensate (manufactured by Kao Corporation, product name: DEMOL N), 462 g of styrene monomer and 9.2 g of butylbenzyl trithiocarbonate were charged, the internal temperature was set to 80°C, and the mixture was stirred at 200 rpm under a nitrogen stream. By adding 6.0 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-17) were determined by analysis in the same manner as in Example 1. The analysis results are shown in Table 1.

### (Polymerization Step 2) Synthesis of (meth)acrylate-based polymer block (B-17)

After the polymerization step 1, when the internal temperature dropped to 45°C, 4154 g of n-butyl acrylate monomer was slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-17) and the (meth)acrylate-based polymer block (B-17) in the n-butyl acrylate-based copolymer were determined by analysis as in Example 1. The analysis results are shown in Table 1. Also, the toluene insoluble content was obtained from the sampled latex. The analysis results are shown in Table 1.

### (Comparative Example 5)

### (Polymerization Step 1) Synthesis of polymer block (A-18)

Polymerization was carried out using an autoclave with a capacity of 10 L and a stirrer and a jacket for heating and cooling. 4616 g of pure water, 206 g of disproportionated potassium rosinate (manufactured by Harima Chemicals Group, Inc.), 2.3 g of potassium hydroxide, 46.2 g of sodium salt of β-naphthalene sulfonic acid formalin condensate (manufactured by Kao Corporation, product name: DEMOL N), 692 g of styrene monomer and 9.2 g of butylbenzyl trithiocarbonate were charged, the internal temperature was set to 80°C, and the mixture was stirred under a nitrogen stream at 200 rpm. By adding 6.0 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight, molecular weight distribution, and glass transition temperature of the polymer block (A-18) were determined by analysis in the same manner as in Example 1. The analysis results are shown in Table 1.

### (Polymerization Step 2) Synthesis of (meth)acrylate-based polymer block (B-18)

After the polymerization step 1, when the internal temperature dropped to 45°C, 3924 g of n-butyl acrylate monomer was slowly added over 2 hours and polymerization was carried out. When the polymerization rate of the n-butyl acrylate monomer reached 80%, the polymerization was stopped by adding a 10% by weight aqueous solution of N, N-diethylhydroxylamine, which is a polymerization terminator , and the unreacted n-butyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-18) and the (meth)acrylate-based polymer block (B-18) in the n-butyl acrylate-based copolymer were determined by analysis as in Example 1. The analysis results are shown in Table 1. Also, the toluene insoluble content was obtained from the sampled latex. The analysis results are shown in Table 1.

### (Comparative Example 6)

### Preparation of mixture of homopolymer of polymer block (A) and homopolymer of (meth)acrylate-based polymer block (B)

### (Synthesis of Homopolymer of Polymer Block (A))

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. When the polymerization rate of the styrene monomer reached 95%, the polymerization was stopped by adding a 10% by weight aqueous solution of N, N-diethylhydroxylamine, which is a polymerization terminator . For the measurement of physical properties, 20 ml of the obtained latex was sampled. The number average molecular weight, molecular weight distribution, and glass transition temperature of the homopolymer of the polymer block (A) were determined by analysis in the same manner as in Example 1. The analysis results are shown in Table 2.

### (Synthesis of Homopolymer of (Meth)acrylate-based Polymer Block (B))

Polymerization was carried out using an autoclave with a capacity of 10 L and a stirrer and a jacket for heating and cooling. 3960 g of pure water, 193 g of disproportionated potassium rosinate (manufactured by Harima Chemicals Group, Inc.), 31.2 g of potassium hydroxide, 17.6 g of sodium salt of β-naphthalene sulfonic acid formalin condensate (manufactured by Kao Corporation, product name: DEMOL N), 4400 g of n-butyl acrylate monomer, 89.8 g of 1.9-nonanediol dimethacrylate, and 5.19 g of butylbenzyltrithiocarbonate were charged, the internal temperature was set to 45°C, and the mixture was stirred at 200 rpm under a nitrogen stream. By adding 3.26 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. When the polymerization rate of the n-butyl acrylate monomer reaches 80%, the polymerization was stopped by adding a 10% by weight aqueous solution of N, N-diethylhydroxylamine, which is a polymerization terminator , and the unreacted n-butyl acrylate monomer was removed by vacuum distillation.

### (Mixing of Homopolymer Latex of Polymer Block (A) and Homopolymer Latex of (Meth)acrylate-based Polymer Block (B))

4000 g of the obtained latex of homopolymer of the polymer block (A) and 4000 g of the latex of the homopolymer of the (meth)acrylate-based polymer block (B) were charged into an autoclave having a capacity of 10 L, a stirrer and a jacket for heating and cooling, and the internal temperature was adjusted to 45°C and the mixture was stirred at 200 rpm. For the measurement of physical properties, 20 ml of the obtained latex was sampled, and the remaining latex was used to prepare a film for evaluation. The average particle size of the latex, the mechanical stability of the latex, the content (mass%) of the homopolymer of the polymer block (A) and the homopolymer of the (meth)acrylate-based polymer block (B) in the mixed polymer, and the toluene insoluble content were determined by analysis in the same manner as in Example 1. The analysis results are shown in Table 2.

### (Example 14)

### (Polymerization Step 1) Synthesis of polymer block (A-19)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The number average molecular weight, molecular weight distribution, and glass transition temperature of the polymeric block (A-19) were determined in the same manner as in Example 1. The analysis results are shown in Table 1.

### (Polymerization Step 2) Synthesis of (meth)acrylate-based polymer block (B-19)

After the polymerization step 1, when the internal temperature dropped to 45°C, 4480 g of ethylhexyl acrylate monomer and 91.4 g of 1.9-nonanediol dimethacrylate were slowly added over 2 hours and polymerization was carried out. When the polymerization rate of the ethylhexyl acrylate monomer reached 80%, the polymerization was stopped by adding a 10% by weight aqueous solution of N, N-diethylhydroxylamine, which is a polymerization terminator , and the unreacted ethylhexyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-19) and the (meth)acrylate-based polymer block (B-19) in the n-butyl acrylate-based copolymer were determined by analysis as in Example 1. Also, the toluene insoluble content was obtained from the sampled latex. The analysis results are shown in Table 1.

### (Example 15)

### (Polymerization Step 1) Synthesis of polymer block (A-20)

Polymerization was carried out using an autoclave with a capacity of 10 L and a stirrer and a jacket for heating and cooling. 4666 g of pure water, 224 g of disproportionated potassium rosinate (manufactured by Harima Chemicals Group, Inc.), 36.4 g of potassium hydroxide, 18.7 g of sodium salt of β-naphthalene sulfonic acid formalin condensate (manufactured by Kao Corporation, product name: DEMOL N), 350 g of styrene monomer and 6.07 g of butylbenzyl trithiocarbonate were charged, the internal temperature was set to 80°C, and the mixture was stirred under a nitrogen stream at 200 rpm. By adding 3.82 g of 2,2'-azobis [2-(2-imidazolin-2-yl) propane] 2 hydrogen chloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The number average molecular weight, molecular weight distribution, and glass transition temperature of the polymeric block (A-20) were determined in the same manner as in Example 1. The analysis results are shown in Table 1.

### (Polymerization Step 2) Synthesis of (meth)acrylate-based polymer block (B-20)

After the polymerization step 1, when the internal temperature dropped to 45°C, 4480 g of octyl acrylate monomer and 91.4 g of 1.9-nonanediol dimethacrylate were slowly added over 2 hours and polymerization was carried out. When the polymerization rate of the octyl acrylate monomer reached 80%, the polymerization was stopped by adding a 10% by weight aqueous solution of N, N-diethylhydroxylamine, which is a polymerization terminator , and the unreacted octyl acrylate monomer was removed by vacuum distillation. For the measurement of physical properties, 20 ml of the obtained latex was sampled, and the remaining latex was used to prepare a film for evaluation. The average particle size of the latex, the mechanical stability of the latex, and the content (mass %) of the polymer block (A-20) and the (meth)acrylate-based polymer block (B -20) in the n-butyl acrylate-based copolymer were determined by analysis as in Example 1. Also, the toluene insoluble content was obtained from the sampled latex. The analysis results are shown in Table 1.

### [Analysis]

### (Measurement of Number Average Molecular Weight and Molecular Weight Distribution of Polymer Block (A))

The number average molecular weight and the molecular weight distribution are polystyrene-equivalent values measured by gel permeation chromatography (GPC) and are measured values under the measurement conditions described below.
Device: HLC-8320 (manufactured by Tosoh Corporation)
Column: 3 TSKgel GMHHR-H in series
Temperature: 40°C
Detection: differential refractometer
Solvent: tetrahydrofuran
Calibration curve: made using standard polystyrene (PS).

### (Glass Transition Temperature of Polymer Block (A))

The glass transition temperature was measured by the following method using a differential scanning calorimeter in accordance with JIS K7121.
Devic: DSC1 (manufactured by Mettler-Toledo International Inc.)
Procedure: Under a nitrogen stream of 50 ml/min, the temperature was raised to 120°C at a heating rate of 10°C/min, kept at 120°C for 10 minutes, and then cooled to -60°C. Based on the DSC curve obtained by raising the temperature to 120°C at a heating rate of 10°C/min, the temperature of the intersection of the straight line, extending the base line on the high temperature side to the low temperature side, and the tangent line, drawn at the point where the gradient is maximum in the curve on the high temperature side of the peak, was defined as the glass transition temperature.

### (Measurement of Content of Polymer Block (A) and (Meth)acrylate-based Polymer Block (B) in (Meth)acrylate-based Block Copolymer)

Measurement was performed by the following method using a pyrolysis gas chromatogram and 1H-NMR.

### Pyrolysis gas chromatogram

Device: HP5890-II
Column: DB-5 0.25 mmφ x 30 m (film thickness 1.0 µm)
Columntemperature:50°C (5min)→10°C/min→150°C→25°C/min→300°C
Injection port temperature: 250°C
Detector temperature: 280°C
Detector: FID

### 1H-NMR

Device: JNM-ECX-400 (manufactured by JEOL Ltd.)
Procedure: The (meth)acrylate-based block copolymer comprising the polymer block (A) and the (meth)acrylate-based polymer block (B) containing no polyfunctional monomer unit is analyzed by a pyrolysis gas chromatogram, and a calibration line is obtained, based on the area ratio of a peak derived from the polymer block (A) and a peak derived from the (meth)acrylate-based polymer block (B), and the contents of the polymer block (A) and the (meth)acrylate-based polymer block (B) in the (meth)acrylate-based block copolymer obtained by 1H-NMR measurement. A sample of the (meth)acrylate-based block copolymer precipitated by mixing the sampled latex with methanol was measured by a pyrolysis gas chromatogram. From the area ratio of a peak derived from the polymer block (A) and a peak derived from the (meth)acrylate-based polymer block (B), the contents of the polymer block (A) and the (meth)acrylate-based polymer block (B) in the (meth)acrylate-based block copolymer were determined using the calibration line prepared above.

### [Measurement of Toluene Insoluble Content]

The latex obtained in the polymerization step 2 was freeze-dried, and 1 g of the obtained solid content obtained was cut into 2 mm squares. The squares were charged into a conical beaker and dissolved in toluene for 16 hours. Then, it was centrifuged, and further, the gel component was separated using a 200-mesh wire mesh, and the dried weight was measured to calculate the toluene insoluble content with the following formula. (Weight of the solid obtained by separating and drying the gel component)/(Weight of the solid obtained by freeze-drying latex containing the (meth)acrylate-based block copolymer)× 100

### (Measurement of Average Particle Size of Latex)

Using a sample in which 0.1 g of the sampled latex was dissolved in 50 g of pure water, the measurement was performed by the dynamic light scattering method with ELSZ-2 manufactured by Otsuka Electronics Co.,Ltd., and the average particle size of the latex was calculated by the photon correlation method.

### (Measurement of Mechanical Stability of Latex)

The mechanical stability of latex was measured by the following method using a Maron mechanical stability tester in accordance with JIS K 6392.

Procedure: After filtering the sampled latex with a wire mesh to remove impurities, the filtered latex was adjusted to 20°C, and 50 g was weighed in a test container. The test container was attached to the testing machine, and measurement was performed for 10 minutes with a load of 10 kg. The sample in the test container after the measurement was filtered through an 80 mesh wire mesh, which had been dried at 125°C for 1 hour and then cooled in a desiccator in advance, the 80 mesh wire mesh and the precipitate were dried in a dryer at 125°C for 1 hour and cooled in the desiccator and the 80 mesh wire mesh and the precipitate weighed. In addition, the total solid content (unit:%) of the sampled latex was determined in accordance with JIS K6387. Next, the coagulation rate (unit:mass%) of the latex was determined using the following formula. [(Weight of 80 mesh wire mesh and precipitate after drying (unit:g))-(Weight of 80 mesh wire mesh (unit:g))]/[50 × ((Total solid content of latex (unit:mass%))/100)]×100

The obtained coagulation rate of the latex was used as the mechanical stability of the latex. The latex with 1% by mass or less of the mechanical stability is regarded as an acceptable product.

### [Preparation of Sample for Tensile Test]

### (Preparation of Latex Containing (meth)acrylate-based Block Copolymer)

2 parts by mass of a butylation reaction product of p-cresol and dicyclopentadiene (manufactured by OUCHI SHINKO CHEMICAL INDUSTRIAL CO.,LTD, product name "Nocrak PBK") as an antioxidant, 0.3 parts by mass of sodium lauryl sulfate (manufactured by Kao Corporation, product name "EMAL 10N") and water were added to 100 parts by mass (solid content equivalent) of the (meth)acrylate-based block copolymer in the latex obtained in the polymerization step 2 so that the solid content concentration of the mixture is 30% by mass and the mixture was prepared by mixing at 20°C for 16 hours using a ceramic ball mill.

### (Making a film)

A ceramic cylinder having an outer diameter of 50 mm was immersed in a coagulating solution containing 62 parts by mass of water, 35 parts by mass of potassium nitrate tetrahydrate, and 3 parts by mass of calcium carbonate for 1 second and taken out. After drying for 4 minutes, it was immersed in the latex prepared above for 2 minutes. Then, it was washed with running water at 45°C for 1 minute and heated at 130°C for 30 minutes to remove water, and a film for a tensile test (140×150 mm, thickness: 0.2 mm) was prepared.

### [Evaluation of Tensile Properties]

The produced film was heat-treated at 130°C for 30 minutes, and then the modulus at 500% elongation, the tensile strength at break, and the elongation at break were measured in accordance with JIS K6251. When the modulus at 500% elongation was 3.0 MPa or less, the tensile strength at break was 14 MPa or more, and the elongation at break was 900% or more, it was regarded as an acceptable product.

### [Evaluation of Heat-aging Resistance]

The produced film was subjected to a heat-aging test at 100°C for 22 hours in a forced circulation type heat-aging tester, and then 500% elongation modulus, tensile strength at break, and elongation at break were measured in accordance with JIS K6251. When the modulus at 500% elongation was 3.0 MPa or less, the tensile strength at break was 14 MPa or more, and the elongation at break was 900% or more, it was regarded as an acceptable product.

### (Example 16)

### Synthesis of (meth)acrylate-based block copolymer latex by forced emulsification method (Polymerization step 1) Synthesis of Polymer Block (A-21)

Polymerization was carried out using an autoclave with a capacity of 10 L and a stirrer and a jacket for heating and cooling. 4616 g of tetrahydrofuran, 87.5 g of styrene monomer, and 1.5 g of benzylbutyltrithiocarbonate were charged, the internal temperature was set to 80°C, and the mixture was stirred under a nitrogen stream at 200 rpm. By adding 0.49 g of azobisisobutyronitrile (manufactured by FUJIFILM Wako Pure Chemical Corporation, product name: AIBN) as a polymerization initiator, polymerization was started. For the measurement of physical properties, 20 ml of the obtained latex was sampled, and the remaining latex was used in the next polymerization step. The number average molecular weight, molecular weight distribution, and glass transition temperature of the polymer block (A-19) were determined by analysis in the same manner as in Example 1. The analysis results are shown in Table 3.

### (Polymerization step 2) Synthesis of (meth)acrylate-based polymer block (B-21)

After the polymerization step 1, when the internal temperature dropped to 45°C, 1120 g of n-butyl acrylate monomer and 22.8 g of 1.9-nonanediol dimethacrylate were slowly added over 2 hours and polymerization was carried out. When the polymerization rate of the n-butyl acrylate monomer reached 80%, the polymerization was stopped by adding a 10% by weight tetrahydrofuran solution of phenothiazine, which is a polymerization terminator . The unreacted n-butyl acrylate monomer and tetrahydrofuran were removed by vacuum distillation and a sample of the (meth)acrylate-based block copolymer was obtained.

### (Forced Emulsification Step)

### Forced emulsification of (meth)acrylate-based block copolymer

350 g of the (meth)acrylate-based block copolymer obtained in the polymerization step 2 was dissolved in 4200 g of benzene. 4725 g of pure water, 70 g of disproportionated potassium rosinate (manufactured by Harima Chemicals Group, Inc.), 0.78 g of potassium hydroxide, 1.4 g of sodium salt of β-naphthalene sulfonic acid formalin condensate (manufactured by Kao Corporation, product name: DEMOL N) were added to the obtained solution and the mixture was forced to emulsify using a homogenizer. Benzene and water were removed by vacuum distillation so that the solid content concentration of the obtained latex was 50%, to obtain a (meth)acrylate-based block copolymer latex. For the measurement of physical properties, 20 ml of the obtained latex was sampled, and the remaining latex was used to prepare a film for evaluation. The average particle size of the latex, the mechanical stability of the latex, the content (mass%) of the polymer block (A-21) and the (meth)acrylate-based polymer block (B-21) in the (meth)acrylate-based block copolymer, and the toluene insoluble content were determined by analysis in the same manner as Example 1. The analysis results are shown in Table 3.

**[Table 1]**

| [Table 1-1] | | | | | | | | | | | |
|---|---|---|---|---|---|---|---|---|---|---|---|
| | | | Example | | | | | | | | |
| | | | 1 | 2 | 3 | 4 | 5 | 6 | 7 | 8 | 9 |
| Polymer block (A) | Monomer unit | - | styrene | styrene | styrene | styrene | styrene | styrene | styrene | styrene | styrene |
| | Number average molecular weight | g/mol | 15,144 | 15,231 | 15,072 | 15,122 | 15,131 | 15,129 | 15,157 | 15,157 | 15,143 |
| | Molecular weight distribution | - | 1.18 | 1.20 | 1.17 | 1.21 | 1.18 | 1.17 | 1.18 | 1.21 | 1.18 |
| | Glass transition temperature | °C | 90 | 92 | 90 | 92 | 90 | 91 | 90 | 90 | 89 |
| (Meth)acrylate-based polymer block (B) | Monomer unit | - | n-butyl acrylate | n-butyl acrylate | n-butyl acrylate | n-butyl acrylate | n-butyl acrylate | n-butyl acrylate | n-butyl acrylate | n-butyl acrylate | n-butyl acrylate |
| | Polyfunctional monomer Unit | - | 1.9-nonanediol dimethacryla te | 1.9-nonanediol dimethacryla te | 1.9-nonanediol dimethacryla te | 1.9-Nonandiol diacrylate | LIGHT ESTER EG | divinyl benzene | - | triallyl isocyanurate | hydroxypyval ypivlate diacrylate |
| Composition of polymer block (A) and (meth)acrylate-based polymer block (B) in (meth)acrylate-based block copolymer | Polymer block (A) | % by mass | 8.9 | 5.3 | 14.8 | 9.1 | 8.8 | 8.9 | 8.9 | 9.0 | 9.2 |
| | (Meth)acrylate-based polymer block (B) | % by mass | 91.1 | 94.7 | 85.2 | 90.9 | 91.2 | 91.1 | 91.1 | 91.0 | 90.8 |
| Toluene insoluble content | | % by mass | 75.5 | 78.9 | 71.1 | 82.2 | 74.9 | 73.5 | 21.5 | 74.4 | 83.5 |
| Latex properties | Latex Particle Size | nm | 167 | 169 | 173 | 179 | 163 | 160 | 175 | 178 | 160 |
| | Mechanical stability | % | 0.09 | 0.03 | 0.02 | 0.07 | 0.09 | 0.04 | 0.03 | 0.09 | 0.03 |
| Tensile properties | Modulus at 500% elongation | MPa | 2.0 | 1.6 | 2.4 | 2.0 | 1.9 | 2.2 | 1.3 | 2.8 | 2.5 |
| | Tensile strength at break | MPa | 20 | 18 | 24 | 21 | 20 | 21 | 18 | 22 | 21 |
| | Elongation at break | % | 1065 | 1230 | 1016 | 1074 | 1071 | 1026 | 965 | 931 | 976 |
| Tensile properties after heat aging test | Modulus at 500% elongation | MPa | 1.8 | 1.5 | 2.2 | 1.9 | 1.7 | 2.0 | 0.8 | 2.6 | 2.4 |
| | Tensile strength at break | MPa | 20 | 18 | 23 | 19 | 18 | 21 | 17 | 21 | 21 |
| | Elongation at break | % | 1067 | 1227 | 1013 | 1070 | 1070 | 1028 | 971 | 933 | 980 |

**Table 1 -2]**

| | | | Example | | | | | | Comparative Example | | | | |
|---|---|---|---|---|---|---|---|---|---|---|---|---|---|
| | | | 10 | 11 | 12 | 13 | 14 | 15 | 1 | 2 | 3 | 4 | 5 |
| Polymer block (A) | Monomer unit | - | styrene | styrene | styrene | Methyl methacrylate | styrene | styrene | styrene | styrene | - | styrene | styrene |
| | Number average molecular weight | g/mol | 15,138 | 19,852 | 19,622 | 20,315 | 15,144 | 15,144 | 15,011 | 29,876 | - | 14,104 | 19,003 |
| | Molecular weight distribution | - | 1.18 | 1.22 | 1.16 | 1.24 | 1.18 | 1.18 | 1.17 | 1.26 | - | 1.26 | 1.24 |
| | Glass transition temperature | °C | 91 | 96 | 96 | 107 | 90 | 90 | 89 | 103 | - | 90 | 95 |
| (Meth)acrylate-based polymer block (B) | Monomer unit | - | n-butyl acrylate | n-butyl acrylate | n-butyl acrylate | n-butyl acrylate | Ethylhexyl acrylate | Octyl acrylate | n-butyl acrylate | n-butyl acrylate | n-butyl acrylate | n-butyl acrylate | n-butyl acrylate |
| | Polyfunctional monomer Unit | - | Trimethylolp ropane triacrylate | 1.9-nonanediol dimethacryla te | - | 1.9-nonanediol dimethacryla te | 1.9-nonanediol dimethacryla te | 1.9-nonanediol dimethacryla te | 1.9-nonanediol dimethacryla te | 1.9-nonanediol dimethacryla te | 1.9-nonanediol dimethacryla te | | - |
| Composition of polymer block (A) and (meth)acrylate-based polymer block (B) in (meth)acrylate-based block copolymer | Polymer block (A) | % by mass | 8.8 | 28.2 | 28.2 | 8.9 | 8.9 | 8.9 | 3.8 | 32.3 | - | 12.2 | 18.0 |
| | (Meth)acrylate-based polymer block (B) | % by mass | 91.2 | 71.8 | 71.8 | 91.1 | 91.1 | 91.1 | 96.2 | 67.7 | - | 87.8 | 82.0 |
| Toluene insoluble content | | % by mass | 73.8 | 84.9 | 26.3 | 73.1 | | | 82.8 | 82.2 | 80.2 | 7.9 | 8.7 |
| Latex properties | Latex Particle Size | nm | 172 | 160 | 169 | 179 | | | 174 | 166 | 178 | 163 | 161 |
| | Mechanical stability | % | 0.02 | 0.09 | 0.10 | 0.02 | | | 0.09 | 0.06 | 0.05 | 0.07 | 0.02 |
| Tensile properties | Modulus at 500% elongation | MPa | 2.7 | 3.0 | 2.7 | 2.8 | 1.5 | 1.5 | 1.4 | 3.3 | 0.5 | 1.4 | 2.0 |
| | Tensile strength at break | MPa | 23 | 28 | 25 | 27 | 20 | 20 | 13 | 27 | 5 | 11 | 13 |
| | Elongation at break | % | 918 | 908 | 904 | 923 | 1065 | 1065 | 1261 | 889 | 1254 | 1221 | 1152 |
| Tensile properties after heat aging test | Modulus at 500% elongation | MPa | 2.5 | 2.9 | 2.5 | 2.7 | | | 1.2 | 3.1 | 0.7 | 1.4 | 1.9 |
| | Tensile strength at break | MPa | 22 | 28 | 23 | 26 | | | 13 | 25 | 6 | 10 | 13 |
| | Elongation at break | % | 914 | 910 | 906 | 920 | | | 1265 | 888 | 1008 | 1182 | 1095 |

### [Table 2]

**[Table 2]**

| | | | Comparative Example 6 |
|---|---|---|---|
| Homopolymer of polymer block (A) | Monomer unit | - | styrene |
| | Number average molecular weight | g/mol | 14,821 |
| | Molecular weight distribution | - | 1.18 |
| | Glass transition temperature | °C | 89 |
| Composition of honopoly polymer of polymer block (A) and honopoly polymer of (meth)acrylate-based polymer block (B) in polymer obtained by mixing | Homopolymer of polymer block (A) | % by mass | 9.1 |
| | Homopolymer of (meth)acrylate-based polymer block (B) | % by mass | 90.9 |
| Toluene insoluble content | | % by mass | 5.5 |
| Latex properties | Average particle size | nm | 168 |
| | Mechanical stability | % by mass | 0.04 |
| Tensile properties | Modulus at 500% elongation | MPa | 1.4 |
| | Tensile strength at break | MPa | 14 |
| | Elongation at break | % | 1145 |
| Tensile properties after heat aging test | Modulus at 500% elongation | MPa | 2.2 |
| | Tensile strength at break | MPa | 13 |
| | Elongation at break | % | 940 |

### [Table 3]

**[Table 3]**

| | | | Example16 |
|---|---|---|---|
| First block | Monomer unit | - | styrene |
| | Number average molecular weight | g/mol | 15,144 |
| | Molecular weight distribution | - | 1.18 |
| | Glass transition temperature | °C | 90 |
| (Meth)acrylate-based polymer block (B) | Polyfunctional monomer Unit | | 1.9-nonanediol dimethacrylate |
| Composition of polymer block (A) and (meth)acrylate-based polymer block (B) in (meth)acrylate-based block copolymer | Polymer block (A) | % by mass | 8.9 |
| | (Meth)acrylate-based polymer block (B) | % by mass | 91.1 |
| Toluene insoluble content | | % by mass | 80.8 |
| Latex properties | Latex Particle Size | nm | 320 |
| | Mechanical stability | % | 2.5 |
| Tensile properties | Modulus at 500% elongation | MPa | 2.0 |
| | Tensile strength at break | MPa | 19 |
| | Elongation at break | % | 1069 |
| Tensile properties after heat aging test | Modulus at 500% elongation | MPa | 1.8 |
| | Tensile strength at break | MPa | 19 |
| | Elongation at break | % | 1070 |

## Claims

1. A (meth)acrylate-based block copolymer comprising a polymer block (A) and a (meth)acrylate-based polymer block (B), wherein:
the (meth)acrylate-based block copolymer contains 5 to 30% by mass of the polymeric block (A) and 70 to 95% by mass of the (meth)acrylate-based polymer block (B) with respect to 100% by mass of the (meth)acrylate-based block copolymer;
the polymer block (A) has a monomer unit derived from a monomer;
when the monomer is polymerized alone, a polymer with a glass transition temperature of 80 °C or higher, measured according to JIS K 7121, can be obtained;
the polymer block (A) consists of at least one monomer unit selected of the group of an aromatic vinyl monomer unit, a methyl methacrylate monomer unit, an acrylonitrile monomer unit or a mixture thereof; and
the polymer block (B) has a (meth)acrylate-based monomer unit and a polyfunctional monomer unit.

2. The (meth)acrylate-based block copolymer of Claim 1, wherein a number average molecular weight of the polymer block (A) is 10,000 or more.

3. The (meth)acrylate-based block copolymer of Claim 1, wherein the (meth)acrylate-based polymer block (B) contains 0.05 to 10% by mass of a polyfunctional monomer unit with respect to 100% by mass of the (meth)acrylate-based polymer block (B).

4. The (meth)acrylate-based block copolymer of any one of Claim 1 to Claim 3, wherein:
the polyfunctional monomer includes a monomer represented by formula (1) or an aromatic polyene monomer; 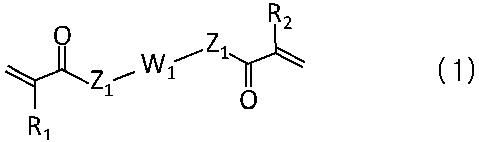
in the formula (1), each of R₁ and R₂ represents any one of hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group;
W₁ represents any one of a saturated or unsaturated hydrocarbon group, a saturated or unsaturated cyclic hydrocarbon group, a saturated or unsaturated hydrocarbon group containing a hetero atom, and a saturated or unsaturated cyclic hydrocarbon group containing a hetero atom;
Z₁ represents any one of oxygen, sulfur, and a structure represented by -NR₀⁻; and
R₀ represents any one of hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

5. A (meth)acrylate-based block copolymer latex containing the (meth)acrylate-based block copolymer of any one of Claims 1 to 4

6. The (meth)acrylate-based block copolymer latex of Claim 5, wherein the (meth)acrylate-based block copolymer latex contains 20 to 100% by mass of toluene insoluble content with respect to 100% by mass of the (meth)acrylate-based block copolymer latex, measured by the method disclosed in the description.

7. The (meth)acrylate-based block copolymer latex of Claim 5 or 6, wherein an average particle size for the (meth)acrylate-based block copolymer latex by measured by dynamic light scattering method is 300 nm or less.

8. A use of the (meth)acrylate-based block copolymer latex of any one of Claims 5 to 7 for the preparation of an immersion molded body.

9. A (meth)acrylate-based block copolymer latex composition containing the (meth)acrylate-based block copolymer latex of any one of Claims 5 to 7

10. The (meth)acrylate-based block copolymer latex composition of Claim 9, wherein a total content of vulcanizing agent and vulcanization accelerator is 5% by mass or less with respect to 100% by mass of the (meth)acrylate-based block copolymer latex contained in the (meth)acrylate-based block copolymer latex composition.

11. A molded body containing a (meth)acrylate-based block copolymer latex composition of Claim 9 or 10.

## Patentansprüche

1. Blockcopolymer auf (Meth)acrylatbasis, umfassend einen Polymerblock (A) und einen Polymerblock (B) auf (Meth)acrylatbasis, wobei:
das Blockcopolymer auf (Meth)acrylatbasis 5 bis 30 Masse-% des Polymerblocks (A) und 70 bis 95 Masse-% des Polymerblocks (B) auf (Meth)acrylatbasis bezogen auf 100 Masse-% des Blockcopolymers auf (Meth)acrylatbasis enthält,
der Polymerblock (A) eine von einem Monomer abgeleitete Monomereinheit aufweist;
wenn das Monomer allein polymerisiert wird, ein Polymer mit einer Glasübergangstemperatur von 80 °C oder höher, gemessen gemäß JIS K 7121, erhalten werden kann;
der Polymerblock (A) aus mindestens einer Monomereinheit besteht, die ausgewählt ist aus der Gruppe einer aromatischen Vinylmonomereinheit, einer Methylmethacrylatmonomereinheit, einer Acrylnitrilmonomereinheit oder einem Gemisch davon; und
der Polymerblock (B) eine Monomereinheit auf (Meth)acrylatbasis und eine polyfunktionelle Monomereinheit aufweist.

2. Blockcopolymer auf (Meth)acrylatbasis nach Anspruch 1, wobei ein zahlenmittleres Molekulargewicht des Polymerblocks (A) 10.000 oder mehr beträgt.

3. Blockcopolymer auf (Meth)acrylatbasis nach Anspruch 1, wobei der Polymerblock (B) auf (Meth)acrylatbasis 0,05 bis 10 Masse-% einer polyfunktionellen Monomereinheit bezogen auf 100 Masse-% des Polymerblocks (B) auf (Meth)acrylatbasis enthält.

4. Blockcopolymer auf (Meth)acrylatbasis nach einem der Ansprüche 1 bis 3, wobei:
das polyfunktionelle Monomer ein durch Formel (1) dargestelltes Monomer oder ein aromatisches Polyenmonomer beinhaltet; 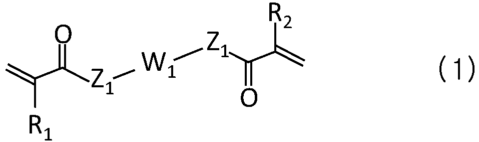
in der Formel (1) R₁ und R₂ jeweils eines von Wasserstoff, Chlor, einer substituierten oder unsubstituierten Alkylgruppe, einer substituierten oder unsubstituierten Alkenylgruppe, einer substituierten oder unsubstituierten Arylgruppe, einer substituierten oder unsubstituierten Mercaptogruppe oder einer substituierten oder unsubstituierten Heterocyclylgruppe darstellen;
W₁ eines von einer gesättigten oder ungesättigten Kohlenwasserstoffgruppe, einer gesättigten oder ungesättigten cyclischen Kohlenwasserstoffgruppe, einer gesättigten oder ungesättigten Kohlenwasserstoffgruppe, die ein Heteroatom enthält, oder einer gesättigten oder ungesättigten cyclischen Kohlenwasserstoffgruppe, die ein Heteroatom enthält, darstellt;
Z₁ eines von Sauerstoff, Schwefel und einer durch -NR₀- dargestellten Struktur darstellt; und
R₀ eines von Wasserstoff, Chlor, einer substituierten oder unsubstituierten Alkylgruppe, einer substituierten oder unsubstituierten Alkenylgruppe, einer substituierten oder unsubstituierten Arylgruppe, einer substituierten oder unsubstituierten Mercaptogruppe oder einer substituierten oder unsubstituierten Heterocyclylgruppe darstellt.

5. Blockcopolymerlatex auf (Meth)acrylatbasis, enthaltend das Blockcopolymer auf (Meth)acrylatbasis nach einem der Ansprüche 1 bis 4.

6. Blockcopolymerlatex auf (Meth)acrylatbasis nach Anspruch 5, wobei der Blockcopolymerlatex auf (Meth)acrylatbasis 20 bis 100 Masse-% eines in Toluol unlöslichen Anteils, bezogen auf 100 Masse-% des Blockcopolymerlatex auf (Meth)acrylatbasis, enthält, gemessen durch das in der Beschreibung offenbarte Verfahren.

7. Blockcopolymerlatex auf (Meth)acrylatbasis nach Anspruch 5 oder 6, wobei eine durchschnittliche Partikelgröße des Blockcopolymerlatex auf (Meth)acrylatbasis, die durch das Verfahren der dynamischen Lichtstreuung gemessen wird, 300 nm oder weniger beträgt.

8. Verwendung des Blockcopolymerlatex auf (Meth)acrylatbasis nach einem der Ansprüche 5 bis 7 zur Herstellung eines Eintauchformkörpers.

9. Blockcopolymerlatexzusammensetzung auf (Meth)acrylatbasis, enthaltend den Blockcopolymerlatex auf (Meth)acrylatbasis nach einem der Ansprüche 5 bis 7.

10. Blockcopolymerlatexzusammensetzung auf (Meth)acrylatbasis nach Anspruch 9, wobei ein Gesamtgehalt an Vulkanisationsmittel und Vulkanisationsbeschleuniger 5 Masse-% oder weniger, bezogen auf 100 Masse-% des in der Blockcopolymerlatexzusammensetzung auf (Meth)acrylatbasis enthaltenen Blockcopolymerlatex auf (Meth)acrylatbasis, beträgt.

11. Formkörper, enthaltend eine Blockcopolymerlatexzusammensetzung auf (Meth)acrylatbasis nach Anspruch 9 oder 10.

## Revendications

1. Copolymère séquencé à base de (méth)acrylate comprenant un bloc polymère (A) et un bloc polymère à base de (méth)acrylate (B), dans lequel :
le copolymère séquencé à base de (méth)acrylate contient de 5 à 30 % en masse du bloc polymère (A) et de 70 à 95 % en masse du bloc polymère à base de (méth)acrylate (B) par rapport à 100 % en masse du copolymère séquencé à base de (méth)acrylate ;
le bloc polymère (A) a une unité monomère dérivée d'un monomère ;
lorsque le monomère est polymérisé seul, il est possible d'obtenir un polymère dont la température de transition vitreuse, mesurée selon la norme JIS K 7121, est égale ou supérieure à 80 °C ;
le bloc polymère (A) consiste en au moins une unité monomère choisi dans le groupe d'une unité monomère de vinyle aromatique, d'une unité monomère de méthacrylate de méthyle, d'une unité monomère d'acrylonitrile ou d'un mélange de ceux-ci ; et
le bloc polymère (B) comporte une unité monomère à base de (méth)acrylate et une unité monomère polyfonctionnelle.

2. Copolymère séquencé à base de (méth)acrylate de la revendication 1, dans lequel un poids moléculaire moyen en nombre du bloc polymère (A) est égale ou supérieure à 10000.

3. Copolymère séquencé à base de (méth)acrylate de la revendication 1, dans lequel le bloc polymère à base de (méth)acrylate (B) contient de 0,05 à 10 % en masse d'une unité monomère polyfonctionnelle par rapport à 100 % en masse du bloc polymère à base de (méth)acrylate (B).

4. Copolymère séquencé à base de (méth)acrylate de l'une quelconque des revendications 1 à 3, dans lequel :
le monomère polyfonctionnel comprend un monomère représenté par la formule (1) ou un monomère polyène aromatique ; 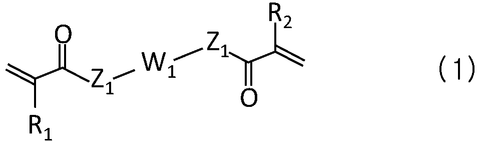
dans la formule (1), R₁ et R₂ représentent chacun l'un quelconque de l'hydrogène, du chlore, du groupe alkyle substitué ou non substitué, du groupe alcényle substitué ou non substitué, du groupe aryle substitué ou non substitué, du groupe mercapto substitué ou non substitué ou du groupe hétérocyclyle substitué ou non substitué ;
W₁ représente l'un quelconque d'un groupe d'hydrocarbures saturés ou insaturés, d'un groupe d'hydrocarbures cycliques saturés ou insaturés, d'un groupe d'hydrocarbures saturés ou insaturés contenant un hétéroatome et d'un groupe d'hydrocarbures cycliques saturés ou insaturés contenant un hétéroatome ;
Z₁ représente l'un quelconque de l'oxygène, du soufre et d'une structure représentée par -NR₀-; et
R₀ représente l'un quelconque de l'hydrogène, du chlore, du groupe alkyle substitué ou non substitué, du groupe alcényle substitué ou non substitué, du groupe aryle substitué ou non substitué, du groupe mercapto substitué ou non substitué ou du groupe hétérocyclyle substitué ou non substitué.

5. Latex de copolymère séquencé à base de (méth)acrylate contenant le copolymère séquencé à base de (méth)acrylate de l'une quelconque des revendications 1 à 4.

6. Latex de copolymère séquencé à base de (méth)acrylate de la revendication 5, dans lequel le latex de copolymère séquencé à base de (méth)acrylate contient de 20 à 100 % en masse de contenu insoluble dans le toluène par rapport à 100 % en masse du latex de copolymère séquencé à base de (méth)acrylate, mesuré par le procédé divulgué dans la description.

7. Latex de copolymère séquencé à base de (méth)acrylate de la revendication 5 ou 6, dans lequel une taille moyenne de particules du latex de copolymère séquencé à base de (méth)acrylate, mesurée par le procédé de dispersion dynamique de lumière, est inférieure ou égale à 300 nm.

8. Utilisation du latex de copolymère séquencé à base de (méth)acrylate de l'une quelconque des revendications 5 à 7 pour la préparation d'un corps moulé par immersion.

9. Composition de latex de copolymère séquencé à base de (méth)acrylate contenant le latex de copolymère séquencé à base de (méth)acrylate de l'une quelconque des revendications 5 à 7.

10. Composition de latex de copolymère séquencé à base de (méth)acrylate de la revendication 9, dans laquelle une teneur totale en agent de vulcanisation et en accélérateur de vulcanisation est de 5 % en masse ou moins par rapport à 100 % en masse du latex de copolymère séquencé à base de (méth)acrylate contenu dans la composition de latex de copolymère séquencé à base de (méth)acrylate.

11. Corps moulé contenant une composition de latex de copolymère séquencé à base de (méth)acrylate de la revendication 9 ou 10.
